# EUROPEAN PATENT APPLICATION

(11) **EP 3 501 264 A2**
(43) Date of publication of application: **26.06.2019**
(21) Application number: 18214931.0
(22) Date of filing: 20.12.2018
(51) Int. Cl.: A01G 9/08, B25J 15/06, A01G 9/029

(54) **SYSTEM, METHOD AND APPARATUS FOR PROCESSING SEEDLINGS**

(30) Priority: 22.12.2017 US 201762609794 P
(71) Applicant: J.D. Irving, Limited, St. John, NB E2L 4M3 (CA)
(72) Inventor: ADAMS, Gregory W., Sussex Corner, New Brunswick E4E 5R2 (CA); MCCARTNEY, Andrew W., Plumweseep, New Brunswick E4G 2N1 (CA); AIKENS, John, New Maryland, New Brunswick E3C 1B8 (CA); DAVENPORT, Chris, Keswick Ridge, New Brunswick E6L 1N8 (CA); MACLEAN, Mark, Hanwell, New Brunswick E3C 25J (CA)
(74) Representative: Mitchell, Simon James

(57) **Abstract**

System (100) for inserting seedlings (216) into soil plugs (126), comprising a soil plug handling apparatus (134) to transfer a soil plug from a soil plug station to a transport apparatus (156) transporting the soil plug to a seedling handling apparatus (224) to insert a seedling into the soil plug.
Method of identifying, transporting and inserting seedlings (216) with a handling apparatus (224) into soil plugs (126) having a longitudinal slit (210), including spreading the slit and inserting a root portion (218) of the seedling into the slit while a stem portion (220) is positioned outside the soil plug and stripping the seedling from the handling apparatus whereby the seedling remains received within the slit.
Apparatus (242) for handling seedlings, comprising a body (244) with a vacuum channel (248) and an open tip (254) sized to slidingly receive a sucked root portion and engage a stem portion of a seedling.

## Description

### FIELD

The present subject matter of the teachings described herein relates generally to systems, methods and apparatuses for handling and/or processing seedlings.

### BACKGROUND

European Patent Publication No. 2,193,193 (Stout) discloses an apparatus for preparing plant tissue (e.g., somatic embryos, embryogenic tissue, organogenic tissue, vegetative tissue, seeds, etc.) for plant production includes a first station having a first rack system configured to support at least one culture vessel, a second station having an automated member configured to manipulate the at least one culture vessel and a third station having a second rack system configured to support the at least one culture vessel after being manipulated by the automated member. The second station can be selectively adjusted to perform more than one operation required in the plant development. According to exemplary embodiments, the apparatus may include more than one second station (e.g., operational stations, etc.).

US Patent 9,572,300 (Jamruszka-Lewis) discloses methods of transferring a plurality of plant somatic embryos to germination medium. The method includes the steps of: (a) depositing a plurality of plant somatic embryos on a surface of a substrate, wherein the substrate has a top surface and a bottom surface; (b) inverting the substrate with the disposed plurality of plant somatic embryos over germination medium contained in a container such that the plurality of plant somatic embryos disposed on the top surface of the substrate are opposite to and facing a surface of the germination medium; and (c) applying a sufficient force to the bottom surface of the substrate such that the plurality of plant somatic embryos are dislodged from the substrate and fall onto the surface of the germination medium. Steps (b) and (c) of the methods can be performed manually or as part of an automated system. The methods also include subjecting the plurality of plant somatic embryos on germination medium to suitable environmental conditions for a period of time sufficient to promote germination of the plurality of plant somatic embryos.

US Patent 5,247,761 (Bigelow) discloses a computer controlled seedling transfer apparatus having a pair of free-wheeling conveyors for supporting a commercial grower's seed flat and pot flat. Each conveyor includes an associated indexing mechanism for gripping the respective flat and translating the flat along the conveyor so that certain of the flat recesses are aligned with a transfer station between the flats. A seedling transfer mechanism is supported above the conveyors so that the mechanism can be moved transversely between the seed flat and pot flat. The seedling transfer mechanism includes extendable gripping fingers for gripping a seedling, removing it from the seed flat, transferring it to a specific pot flat recess and replanting the seedling. The indexing mechanisms for the two flats are computer controlled, as is the seedling transfer mechanism, to optimize the seedling transfer operation and to ensure that the pot flat is completely filled with seedlings. In one embodiment, a sensor, such as a camera or an infrared sensor, are mounted over the seed flat and pot flat to sense the condition of the recesses in the flats. The computer responds to the sensed conditions of the recesses to control the sequence of transfer moves, for example to avoid attempted transfers from empty seed flat recesses. A nozzle is provided in another embodiment that is associated with the seedling transfer mechanism that is used to facilitate removal, transfer and replanting of the seedling. The seedling transfer mechanism includes a pair of resilient gripping fingers with a flexible web extending therebetween. The web slightly bends the seedling during the transfer so that the seedling does not get tangled with the transfer mechanism.

US Patent 7,117,634 (Pelton) discloses a method of making tree seedling plugs which permits the plug to be transplanted earlier. The tree seeds are planted in a structured soil growing medium, and a miniplug is formed which may is then transferred to a standard size growing cell for further development to form the plug.

US Patent 5,842,306 (Onosaka) discloses a transplanter for transplanting a plug seedling grown in each cell of a plug seedling tray to a certain size to a transplanted seedling tray or a pot comprising a plug seedling carrying means for carrying the plug seedling tray, a transplanted seedling carrying means spaced at a certain distance from the plug seedling carrying means for carrying the transplanted seedling tray or the pot, a seedling transfer mechanism disposed across the plug seedling carrying means and the transplanted seedling carrying means for transferring the plug seedling from the position above the plug seedling tray to the position above the transplanted seedling tray, the seedling transfer mechanism including an endless chain or belt passing above the plug seedling carrying means and the transplanted seedling carrying means and circulating in a plane made at a certain angle with respect to a horizontal plane, the endless chain or belt being provided at its outer peripheral surface with receptacles for containing plug seedlings to be spaced at a predetermined distance with respect to each other, a seedling picking-out mechanism for picking out the plug seedling from the cell of the plug seedling tray and introducing it into one of the receptacles of the seedling transfer mechanism, and a seedling planting mechanism for picking out the plug seedling from the receptacle and planting it in the cell of the transplanted seedling tray or the pot.

US Patent Publication No. 2012/0003074 (Rubatino) discloses a pick-up and delivery system including a pick-up assembly and a delivery assembly. The pick-up assembly includes a robotic arm, a pick-up device rotatably mounted on the robotic arm, and a first vacuum pressure supply port operably connected to the pick-up device. The delivery assembly includes an insertion device and a second vacuum pressure supply port. The insertion device may include an insertion member and a release assistance rod arranged inside the insertion member. The release assistance rod is moveable between an extended position and a retracted position. When the release assistance rod is in the extended position, a proximal end extends beyond an end of the insertion member. Further aspects are directed towards methods for grasping and releasing an object with a pick-up and delivery system.

The process of removing seedlings from germination media, selecting suitable seedlings, picking up the suitable seedlings and inserting the seedlings into growth media such as soil plugs is typically laborious and inefficient.

A skilled technician may be involved in evaluating morphological features of each seedling and manually selecting desirable seedlings. The skilled technician may then transfer the selected seedlings to growth medium. This can provide a major production bottleneck when thousands of seedlings are being processed.

Although systems have been developed that are effective in transporting seedlings, problems are encountered. For example, in some applications, seedlings are hydrated to prevent damage from desiccation causing them to often stick to delivery systems and incur damage during removal attempts. Sticking can cause orientation or placement issues and difficulty in inserting seedlings in growth media with the possibility of wasting viable seedlings.

Thus, there is a need in the industry to develop new systems, apparatuses and methods for plant seedling identification, pick-up and/or delivery.

### SUMMARY

An aspect of the disclosure provides a method of inserting seedlings into soil plugs, the method comprising:
automatically identifying a target seedling located in a pick-up area using seedling detection apparatus;
picking-up the target seedling with an automated seedling handling apparatus;
transporting the target seedling to an insertion area;
providing a first soil plug in the insertion area to receive the target seedling, the first soil plug having a first plug end, a second plug end longitudinally spaced apart from the first plug end and a longitudinal slit extending from the first plug end toward the second plug end;
spreading the slit in the first soil plug;
inserting a root portion of the seedling into the slit while a stem portion of the seedling is positioned outside the first soil plug;
stripping the target seedling from the handling apparatus whereby the seedling remains received within the slit in the first soil plug.

In an embodiment, the soil plug is a stabilized soil plug, optionally stabilized with a stabilization compound and/or polymeric compound.

In an embodiment, the seedling handling apparatus comprises a body having a vacuum channel configured to receive the root portion of a seedling and is operable to pick-up the target seedling by sucking the root portion of the target seedling into the vacuum channel.

In another embodiment further comprising longitudinally aligning the vacuum channel with the slit, whereby the root portion of the target seedling is oriented substantially parallel to the slit.

In another embodiment, step f) comprises inserting a tip of the seedling handling apparatus containing the target seedling into the first plug to insert the root portion of the seedling within the slit.

In yet another embodiment, the slit in the first soil plug is spread by the seedling handling apparatus.

In an embodiment, the seedling handling apparatus comprises a ploughshare portion proximate the tip and positioned so that the ploughshare precedes the tip as the seedling handling apparatus is translated relative to the first soil plug to spread/open the slit in advance of the tip.

In another embodiment, step f) is performed while imparting relative, longitudinal movement between the handling apparatus and the first soil plug.

In another embodiment, step f) is performed while translating the tip of the handling apparatus longitudinally through the slit in the first soil plug.

In yet another embodiment, the target seedling is mechanically stripped from the handling apparatus in step g).

In an embodiment, the target seedling translates with the handling apparatus until engagement between the stem portion of the target seedling and the first soil plug inhibits translation of the target seedling relative to the first soil plug, after which continued translation of the handling apparatus strips the target seedling from the handling apparatus.

In another embodiment further comprising closing the slit around the root portion of the target seedling to enclose the root portion within the first soil plug.

In another embodiment, identifying the target seedling comprises inspecting a plurality of seedlings in the pick-up area using a camera vision system, identifying at least one of the plurality of seedlings that satisfies a pre-determined seedling selection criteria using a controller, and designating at least one seedling as the target seedling to be picked-up.

In yet another embodiment, the pre-determined seedling selection criteria comprises at least one of seedling area, elongation and spread.

In an embodiment, the pick-up area comprises a pick-up table for holding a plurality of seedlings and the target seedling is picked-up from amongst the plurality of seedlings.

In another embodiment, the pick-up table rotates about a table rotation axis, and wherein the target seedling is picked-up while the pick-up table is rotating.

In another embodiment, the pick-up table rotates to transport the plurality of seedlings from a deposit region where the plurality of seedlings are deposited on the pick-up table to an ejection region and further comprising ejecting unselected seedlings from the pick-up area when they enter the ejection region.

In another embodiment, the unselected seedlings are ejected from the pick-up table via a stream of air.

In another embodiment the method further comprises receiving a plurality of seedlings from a growing station and washing the plurality of seedlings to remove excess growing material at a washing station before the plurality of seedlings are positioned in the pick-up area.

In yet another embodiment, the method further comprises transferring the first soil plug containing the first seedling to a packing station and automatically packing the first soil plug containing the first seedling into a holding tray using an automated packing apparatus.

Another aspect of the disclosure includes an apparatus for handling seedlings, the apparatus comprising:
a body having an attachment portion that is connectable to a driving member (e.g. robot);
a vacuum channel comprising a first end fluidly connectable to a vacuum generator, an open tip spaced apart from the first end and a hollow channel interior extending therebetween, the tip terminating in a rim that is sized to slidingly receive a root portion of a seedling and engage a stem portion of the seedling, whereby when a vacuum is applied to the vacuum channel the root portion of the seedling is sucked into the channel interior and the stem portion of the seedling remains outside the vacuum channel.

In an embodiment, the vacuum channel further comprises a throat portion disposed between the first end and the tip, and wherein the throat portion has a smaller area than the tip and the vacuum channel generally narrows from the tip to the throat portion.

In another embodiment, the body has a base surface that is substantially downward facing when the apparatus is in use, and wherein the tip extends beyond the base surface.

In yet another embodiment, the base surface has a base width in a lateral direction and the tip has a tip width in the lateral direction that is less than 25% of the base width.

In another embodiment, the rim has a first portion lying in a first plane, and a second portion lying in a second plane that intersects the first plane at an oblique angle.

In another embodiment, the second plane is substantially parallel to the base surface.

In an embodiment, the vacuum channel extends along a channel axis and wherein the first plane is orthogonal to the channel axis.

In another embodiment, a line of intersection between the first plane and the second plane is spaced apart from the channel axis.

In yet another embodiment, the channel axis is inclined at an oblique angle relative to a plane containing the base surface.

In an embodiment, the body is rotatably connected to the driving member and can rotate about a rotation axis.

In another embodiment, the tip is configured to be inserted into a soil plug to deposit the root portion of the seedling within the soil plug.

In another embodiment, the tip is positioned such that when the tip is inserted into the soil plug the base surface bears against an upward facing side surface of the soil plug.

In another embodiment the apparatus further comprises a ploughshare portion positioned below the base surface and aligned with the tip, the ploughshare portion configured to be inserted into the soil plug and form an opening/slit in the soil plug into which the root portion of the seedling is deposited.

In an embodiment, the apparatus is translatable relative to the soil plug in an insertion direction to translate the ploughshare and tip through an interior of the soil plug, whereby the tip trails the ploughshare portion through the interior of the soil plug.

In another embodiment, the ploughshare has a base adjacent the tip of the vacuum channel and a leading edge spaced from the base in insertion direction, and wherein the leading edge is narrower than the base.

In another embodiment, the ploughshare tapers from the base to the leading edge.

In yet another embodiment, the ploughshare portion extends between the base surface and an outer surface of the tip.

In an embodiment, the body and vacuum channel are of integral, one-piece construction.

In another embodiment, the vacuum channel extends along a channel axis and when the vacuum apparatus is in use the channel axis is inclined at an oblique channel angle relative to a vertical axis.

In another embodiment, the channel angle is between about 15 degrees and about 60 degrees, and preferably is about 45 degrees.

A further aspect of the disclosure includes a system for inserting seedlings into soil plugs, the system comprising:
a primary transport apparatus;
a soil plug station configured to receive a plurality of soil plugs and having a plug handling apparatus to transfer a first soil plug from the soil plug station to the transport apparatus; and
a seedling handling station downstream from the soil plug station and configured to receive a plurality of seedlings, the seedling station having a seedling handling apparatus;
wherein the transport apparatus is operable transport the first soil plug from the soil plug station to the seedling station and when the first soil plug is at the seedling station the seedling handling apparatus is configured to insert a first seedling into the first soil plug.

In an embodiment, the seedling handling station comprises a pick-up area to receive the plurality of seedlings and an inspection apparatus configured to inspect the plurality of seedlings in the pick-up area and automatically identify at least one seedling that is acceptable to be selected as the first seedling.

In another embodiment, the inspection apparatus comprises at least a first camera to visually inspect the plurality of seedlings and a controller communicably linked to the camera process the visual data received from the camera and identify acceptable seedlings.

In yet another embodiment, the controller is configured to identify acceptable seedlings by comparing at least one physical attribute of each seedling to a pre-determined seedling criteria threshold.

In another embodiment, the pick-up area comprises a rotatable pick-up table that supports the plurality of seedlings such that the plurality of seedlings rotate with the pick-up table.

In yet another embodiment, the seedling handling apparatus comprises a robot having an end effector configured to pick-up seedlings from the pick-up table.

In an embodiment, the seedling handling apparatus is operable to pick-up seedlings from the pick-up table while the pick-up table is rotating.

In another embodiment, the end effector comprises:
a) a body having an attachment portion that is connectable to a driving member;
b) a vacuum channel comprising a first end fluidly connectable to a vacuum generator, an open tip spaced apart from the first end and a hollow channel interior extending therebetween, the tip terminating in a rim that is sized to slidingly receive a root portion of a seedling and engage a stem portion of the seedling, whereby when a vacuum is applied to the vacuum channel the root portion of the seedling is sucked into the channel interior and the stem portion of the seedling remains outside the vacuum channel.

In another embodiment, the system further comprises a washing station configured to receive the plurality of seedlings and to wash the plurality of seedlings to separate the plurality of seedlings from excess growing material, and a secondary transport apparatus to transfer the washed plurality of seedlings from the washing station to the seedling handling station.

In yet another embodiment, the system further comprises a packing station downstream from the seedling handling station to receive the first soil plug containing the first seedling and automatically packing the first soil plug containing the first seedling into a holding tray using an automated packing apparatus.

In various embodiments, the methods use a system described herein. In various embodiments, the system comprises an apparatus for handling seedlings described herein.

This summary is intended to introduce the reader to the more detailed description that follows and not to limit or define any claimed or as yet unclaimed invention. One or more inventions may reside in any combination or sub-combination of the elements or process steps disclosed in any part of this document including its claims and figures.

### DRAWINGS

The drawings included herewith are for illustrating various examples of articles, methods, and apparatuses of the teaching of the present specification and are not intended to limit the scope of what is taught in any way.

In the drawings:
Figure 1 is a perspective view of one example of a system for processing seedlings;
Figure 2 is another perspective view of the system of Figure 1;
Figure 3 is a perspective view of a portion of the system of Figure 1;
Figure 4 is the perspective view of Figure 3 with the portions of the system in a different configuration;
Figure 5 is the perspective view of Figure 3 with the portions of the system in a different configuration;
Figure 6 is a perspective view of a portion of one example of a seedling handling apparatus;
Figure 7 is a front view of the portion of the seedling handling apparatus of Figure 6;
Figure 8 is a top view of the portion of the seedling handling apparatus of Figure 6;
Figure 9 is a bottom view of the portion of the seedling handling apparatus of Figure 6;
Figure 10 is a cross-sectional view taken along line 10-10;
Figure 11 is a rear view of the portion of the seedling handling apparatus of Figure 6;
Figure 12 is a schematic illustration of the portion of the seedling handling apparatus of Figure 6 in a first position relative to a soil plug;
Figure 13 is a cross-sectional view taken along line 13-13;
Figure 14 is a schematic illustration of the portion of the seedling handling apparatus of Figure 6 in a second position relative to a soil plug;
Figure 15 is a cross-sectional view taken along line 15-15;
Figure 16 is a perspective view of one example of a plug carrier that is usable with the system of Figure 1;
Figure 17 is a top view of the plug carrier of Figure 16;
Figure 18 is a front view of the plug carrier of Figure 16;
Figure 19 is a cross-sectional view taken along line 19-19;
Figure 20 is a cross-sectional view taken along line 20-20;
Figure 21 is a schematic, cross-sectional view of a portion of the system of Figure 1;
Figure 22 is a flow chart showing one example of a method of processing seedlings.

### DETAILED DESCRIPTION

Various apparatuses or processes will be described below to provide an example of an embodiment of each claimed invention. No embodiment described below limits any claimed invention and any claimed invention may cover processes or apparatuses that differ from those described below. The claimed inventions are not limited to apparatuses or processes having all of the features of any one apparatus or process described below or to features common to multiple or all of the apparatuses described below. It is possible that an apparatus or process described below is not an embodiment of any claimed invention. Any invention disclosed in an apparatus or process described below that is not claimed in this document may be the subject matter of another protective instrument, for example, a continuing patent application, and the applicants, inventors or owners do not intend to abandon, disclaim or dedicate to the public any such invention by its disclosure in this document.

As used herein, the term "seedling" refers to a young plant that has developed out of a plant embryo or seed, and includes as an example, a somatic seedling (i.e. a seedling produced via somatic embryogenesis). Each seedling may include a root (e.g. primary root or radicle), the hypocotyl or shoot, the cotyledons (seed leaves or embryonic leaves/needles) and optionally one or more true leaves or needles (secondary needles), depending on the stage of development of the seedling. Seedlings may be of any suitable species of plant, including coniferous or deciduous trees, bushes, shrubs, food crops and the like. For the purposes of this description, each seedling is understood to generally include a root portion that is typically below ground when the seedling is planted (including the radicle), and a stem portion that is understood to include the "non-root" portions of the seedling that are typically above ground when the seedling is planted, including, for example, the shoot/stem/stalk, leaves and needles if any, and the like.

As used herein, the term "media", or growing media, refers to solid or semi-solid material in which a plant embryo, seed or seedling can grow. For example, the media can include soil plugs into which a seedling can be inserted. The soil plugs (also referred to as soil pellets) may be of any suitable type of soil plug and may have any suitable composition. For example, the soil plugs may be made of peatmoss or a peatmoss blend such as a peatmoss/coconut fibre (coir) blend. Optionally, the soil plugs can be stabilized, for example by using a soil stabilization compound and/or polymeric compound, to help provide a desired level of mechanical strength and/or resiliency. Some examples of suitable soil plugs that can be used with the teachings herein include Jiffy-Preforma Plugs or Grow-Tech FlexiPlugs.

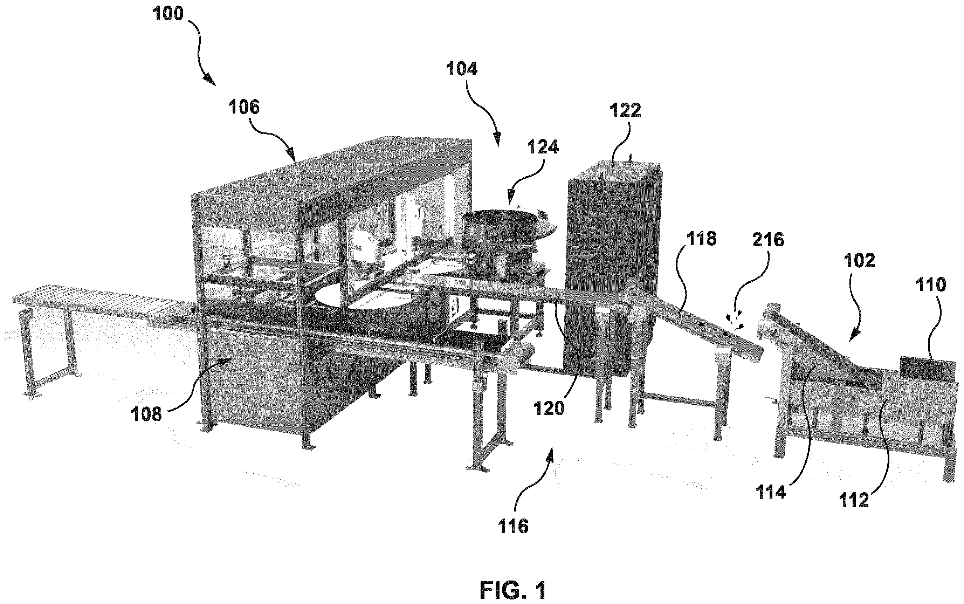

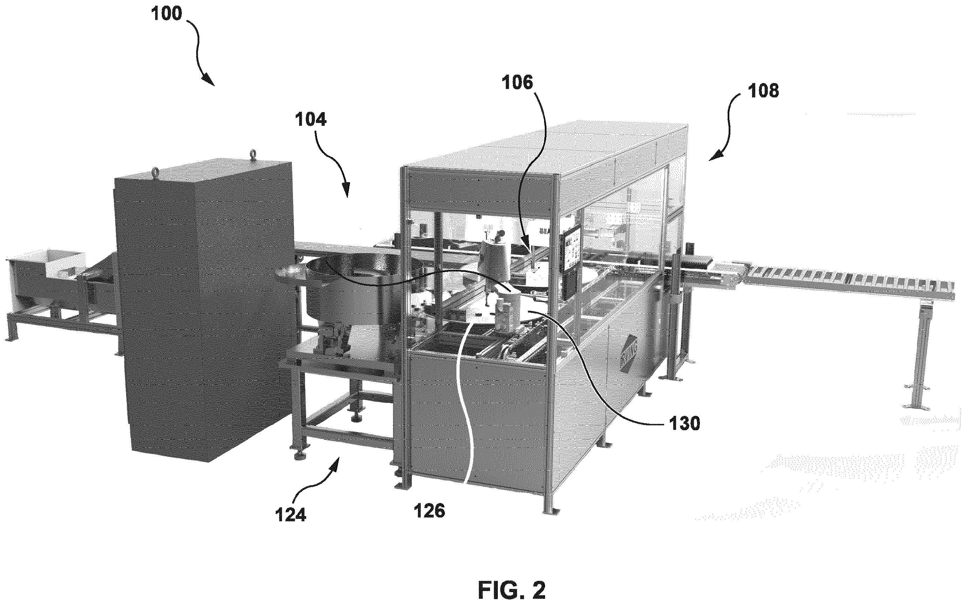

Referring to Figures 1 and 2, one example of a system 100 for processing seedlings is shown. The system 100 includes several modules (which may also be referred to here as "systems", "sub-systems", "assemblies" and/or "stations"), including an optional washing module 102, media handling module 104, seedling handling module 106 and an optional packing module 108. A controller 122 can be connected to some or all of the modules to control their functions individually (optionally based on some predetermined programing and/or operating parameters and the like), or optionally may be configured to coordinate the operation of two or more of the modules (including as described herein). The controller 122 may be a generally centralized controller, or alternatively may include two or more sub-controllers that are distributed around the system 100, including some sub-controllers associated with the modules. The controller 122 may include a computer, PLC and any other suitable hardware and/or firmware.

The washing station 102 is configured to receive an incoming plurality of seedlings to be processed. In some embodiments, the seedlings may be mixed with growing media (for example from a growing tray in which the seedling was sprouted), debris and other contaminants. To help separate the seedlings from the growing media and debris, the incoming seedlings can be placed into the inlet hopper 110 of the washing station 102, and then cleaned in the washing section 112. The cleaned seedlings can then be carried by the exit conveyor 114 and optionally transferred to an intermediary conveyor mechanism that conveys the seedlings to the seedling handling module 106. Alternatively, the exit conveyor 114 may be directly connected to other portions of the system 100, eliminating the need for an intermediary conveyor mechanism. The washing station 102 may be of any suitable configuration, and one example of a suitable washing station is a tank with air knives to facilitate separating the seedlings from gel germination media. Alternatively, in some embodiments, the seedlings may be pre-cleaned before being provided to the system 100, in which case the washing module 102 may not be needed.

The intermediary conveyor 116 can be any suitable apparatus that can transport the seedlings to the seedling handling module 106, for example when used with washing station 102, it transports the seedlings from the washing module 102 to the seedling handling module 106. In the illustrated example, the intermediary conveyor 116 includes an upstream conveyor 118 and a downstream conveyor 120. The conveyors 118 and 120 may be operated at the same speed or, alternatively, may be operated at different speeds. For example, the downstream conveyor 120 may be operated at a faster speed than the upstream conveyor 118 which may help separate and/or space out the seedlings as they travel along the intermediary conveyor 116. Optionally, the intermediary conveyor 116 may include more than the two conveyors 118 and 120 illustrated.

Alternatively, instead of having two or more separate conveyors, the intermediary conveyor 116 may include only a single conveyor belt or an alternative transport mechanism. Optionally, the intermediary conveyor 116 may include moisture module that can be used to help keep the seedlings sufficiently moist as they are transported. This may include a mister or other such mechanism that can spray water or other liquids onto the seedlings, or any other suitable apparatus. Moisture modules may also be provided in some or all of the other modules or stations in the system 100 so that the seedlings are kept sufficiently moist during the entire handling process.

In some embodiments, the seedlings provided to the system 100 may be "pre-washed" (i.e. washed in a separate location and/or as part of a separate process). In such embodiments, the system 100 need not include its own washing station 102, and instead the seedlings may be introduced directly into the seedling handling module 106 or at any other suitable location in the system 100.

### MEDIA HANDLING MODULE

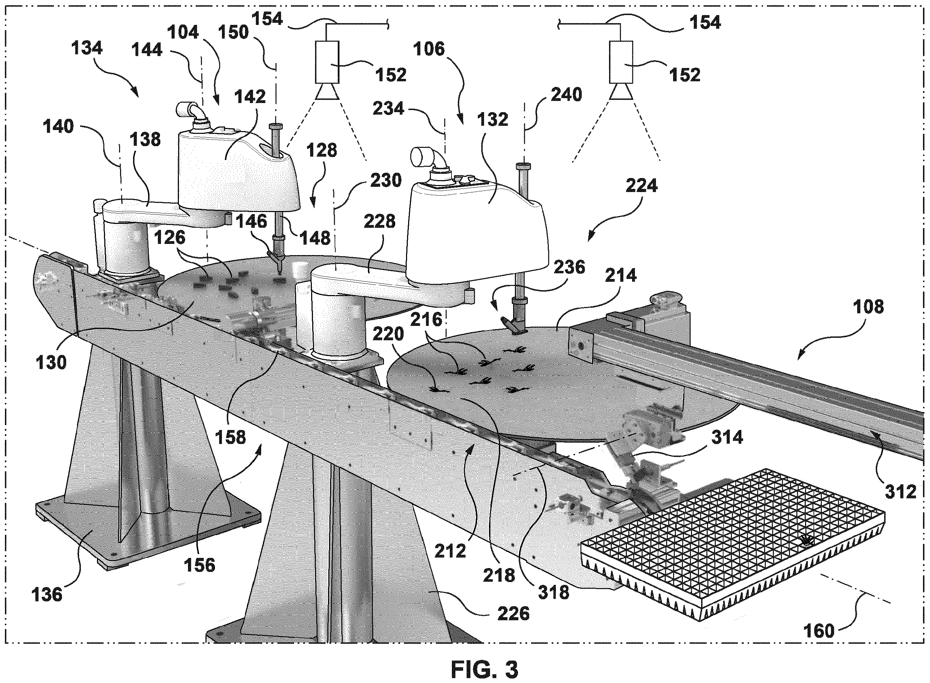

The media handling module 104 can be any suitable apparatus that can receive and handle the growing media into which the seedlings are to be inserted/planted. In the illustrated example, the system 100 is configured to utilize soil plugs, see soil plugs 126 in Figure 3 as an example, as the growing media, and the media handling module 104 is configured to receive and manipulate the soil plugs. In other embodiments, the media handling module 104 may be configured to handle a different type of growing media, and may include different handling and transfer mechanisms.

In the illustrated example, the media handling module includes an input hopper and feeding module 124 that is configured to receive a batch of soil plugs 126 and to arrange and feed the soil plugs to the rest of the media handling module 104 at a desired rate and in a desired orientation, and the like. One example of a suitable hopper and feeding module 124 is vibratory bowl feeder model 30CWJJ (Feed Rite Automation). In some examples, the hopper portion and feeding portions of the hopper and feeding module 124 may be provided as separate components that are arranged to work together as described. In other embodiments, they may be part of the same apparatus. In some embodiments, the feeding module may include a vibration table that can vibrate the soil plugs 126 and cause them to walk up a ramp/shoot to help ensure they are arranged in a desired orientation as they exit the hopper and feeding module 124.

Optionally, the media handling module 104 can include a pick-up station downstream from the hopper and feeding module 124, where soil plugs 126 exiting the hopper and feeding module 124 can be collected. The pick-up station may be of any suitable configuration, and may include a table, hopper, conveyor or the like for receiving the soil plugs 126 pending further handling.

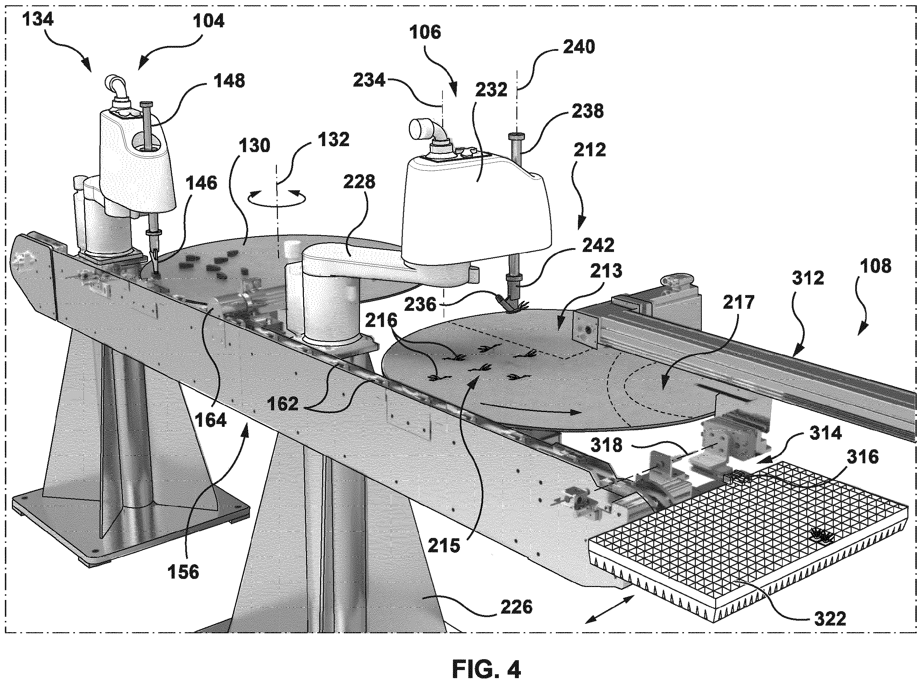

Referring also to Figures 3-5, in which portions of the system 100 are illustrated in more detail, with other aspects of the system 100 removed for clarity. As seen in these figures, the media handling module 104 includes a pick-up station 128 that includes a pick-up table 130 for receiving and temporarily holding the soil plugs 126. The pick-up table 130 may be of any suitable configuration, and in this embodiment is a generally circular, planar table that can rotate about a table axis 132 (Figure 4). In this arrangement, soil plugs 126 resting on the table 130 can rotate with the table 130 to move through the pick-up station 128. This may help move the soil plugs 126 into one or more desired pick-up locations and/or may help the system 100 accommodate additional incoming soil plugs 126 on the table 130 when in use.

In addition to the pick-up table 130, the media handling module 104 also preferably includes at least one automated media handling apparatus that can pick up individual ones of the soil plugs 126 and move them to another portion of the system 100 for further handling/ processing. Optionally, the automated media handling apparatus can include a robot (such as a multi-axis robot, an articulated robot arm and the like) that can perform a variety of tasks and movements. One example of a suitable robot that can serve as the media handling apparatus is the ABB pick and place robot IRB 910SC-3/0.55.

Referring to Figures 3-5, in the illustrated example the system 100 includes a media handling apparatus in the form of a robot 134 that includes a base 136, a first linkage 138 that is pivotable relative to the base 136 about a first axis 140, a second linkage 142 that is pivotable relative to the first linkage 138 about a second axis 144 and an end effector 146 that is operable to pick-up individual soil plugs 126. The end effector 146 is, in this example a suction gripper that can grip on side of the soil plugs 126 via suction. The end effector 146 is connected to the second linkage 142 via a connector rod 148 that can both rotate about and translate along a third axis 150. This can enable the end effector 146 to be moved closer to and farther away from the pick-up table 130, and the rotation can enable the end effector 146 to align the soil plugs 126 in a desired orientation for downstream processing. The robot 134 can be controlled by the controller 122 or any other suitable control mechanism. While one example of the robot 134 has been illustrated, other suitable robots and mechanisms may be used in other embodiments.

Preferably, the media handling module 104 can include an automated inspection apparatus that is configured to inspect/ analyze the soil plugs 126 that are resting on the soil pick-up table to identify soil plugs 126 that are suitable for further use in the system 100 and, if necessary, identify soil plugs 126 that are damaged, misshapen or are otherwise unsuitable for further use. For example, if a soil plug is 126 broken it may no longer have the desired shape/geometry to be properly handled throughout the rest of the system 100, or may no longer be of the right size to adequately support a seedling. To help prevent such soil plugs from proceeding through the system 100, the robot 134 may be operated to pick only acceptable soil plugs 126 from the pick-up table 130, and to leave any unwanted soil plugs 126 on the pick-up table 130 for removal/disposal.

Optionally, the automated inspection apparatus may include any suitable type of sensor or other detection mechanism to inspect and differentiate between the soil plugs 126 on the pick-up table 130. For example, an automated inspection apparatus may include a camera or other type of optical sensor, a weight or mass based sensor, an IR or light based sensor or the like for determining the condition of the soil plugs 126. In the illustrated example, the media handling module 104 includes an inspection apparatus having a camera 152 (Figure 3) that is positioned so that it can see the soil plugs 126 on the pick-up table 130. The camera 152 can be connected to the controller 122, for example via wire 154 or wirelessly, which may control the camera 152 and/or may process the images captured by the camera 152. For example, the controller 122 may include an image processing module that may be operable to, for example, compare the images of the soil plugs 126 to pre-set reference images and to designate a soil plug 126 as being acceptable if it conforms to the reference images (within a given tolerance), and to flag a soil plug 126 as being unacceptable if it does not match the desired reference image.

Once designated as acceptable, the system 100 may then track the location of a given soil plug 126 on the pick-up table (optionally via the camera 152 and controller 122) so as to be able to direct the robot 134 to pick-up the desired soil plugs 126 and avoid the unwanted soil plugs.

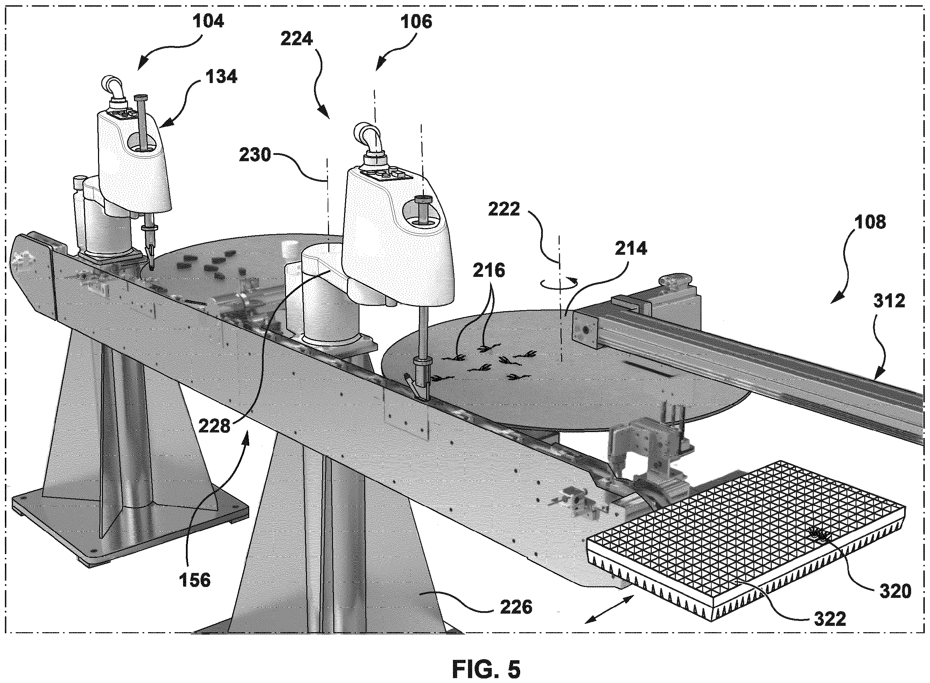

Having identified at least one acceptable soil plug 126, the robot 134 can then be used to grasp the soil plug (Figure 3), transport the soil plug 126 away from the pick-up table 130 (Figure 4) and then deposit the soil plug 126 on a subsequent portion of the system 100 for further processing (Figure 5).

In the illustrated example, the system 100 includes a main conveying module 156 that is configured to receive the soil plugs 126 form the media handling module 104 and to convey the soil plugs 126 to the seedling handling module 106 to receive a seedling. The conveying module 156 may have any suitable configuration, and in the illustrated example includes a conveyor track 158 that extends along a conveyor axis 160 and extends from the media handling module 104 to the seedling handling module 106 and terminates adjacent the optional packing module 108.[0097]

In the illustrated embodiment, the conveyor track 158 includes a plurality of plug carriers 162 that are spaced apart from each other along the length of the conveyor track 158 and are configured to removably retain the soil plugs 126 in a desired orientation as they are conveyed along the conveyor track 158. This may help keep the soil plugs 126 in a desired orientation and in some embodiments, the plug carriers 162 may also help support the soil plugs 126 and reduce the likelihood of a soil plug 126 being damaged during the seedling insertion process and the like.

Preferably, the system 100 may also include an apparatus to form a slit/groove in the soil plugs 126 into which a seedling, or at least the root portion of a seedling, can be inserted. This may help facilitate a desired placement of a seedling relative to the soil plug. For example, the system 100 may include any suitable type of plug slitting module that can cut a slit in the soil plugs 126. The slit may be formed in the soil plugs 126 before they enter the media handling module 104, or as illustrated in this example, may be formed as the soil plugs 126 are conveyed from the media handling module 104 to the seedling handling module 106.

Referring to Figure 4, in this example conveying module 156 includes a plug slitting module 164 that is positioned above the conveyor track 158 so as to be able to cut a slit in an upward facing surface of the soil plugs 126 as they are held in their respective carriers 162 and conveyed along the conveyor track 158. In this arrangement, the plug slitting module 164 remains stationary and the soil plugs 126 are translated past the plug slitting module 164 in the direction of axis 160. Alternatively, the plug slitting module 164 may be movable so that it can be translated relative to a static soil plug 126, or both the soil plug 126 and the plug slitting module 164 may be movable.

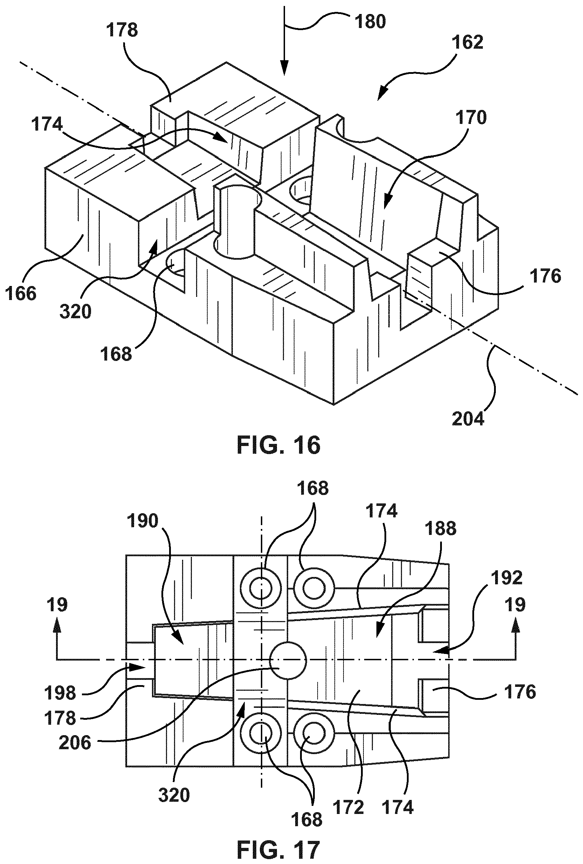

Referring also to Figure 16, one example of a plug carrier 162 includes a body 166 that can be secured to the conveyor track 158, for example by passing fasteners (such as bolts) through respective fastener apertures 168 (see also Figure 17).

The plug carrier 162 includes a central cavity 170 that has a bottom wall 172, opposing side walls 174, a front end wall 176 (with reference to the direction of travel of the conveyor track 158) and an opposing rear wall 178. The upper side of the cavity 170 is open to receive a soil plug 126 in a generally vertical insertion direction, as indicated by arrow 180.

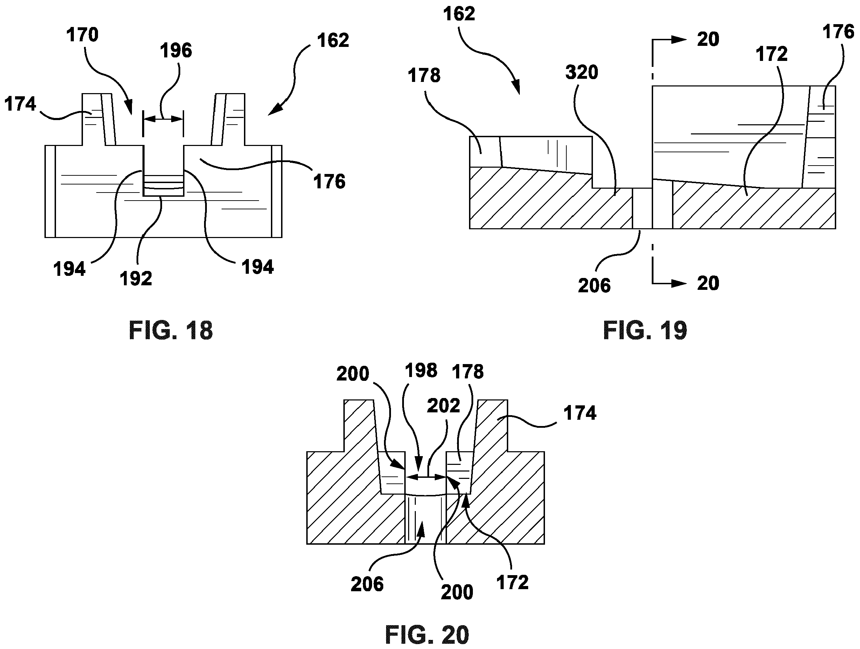

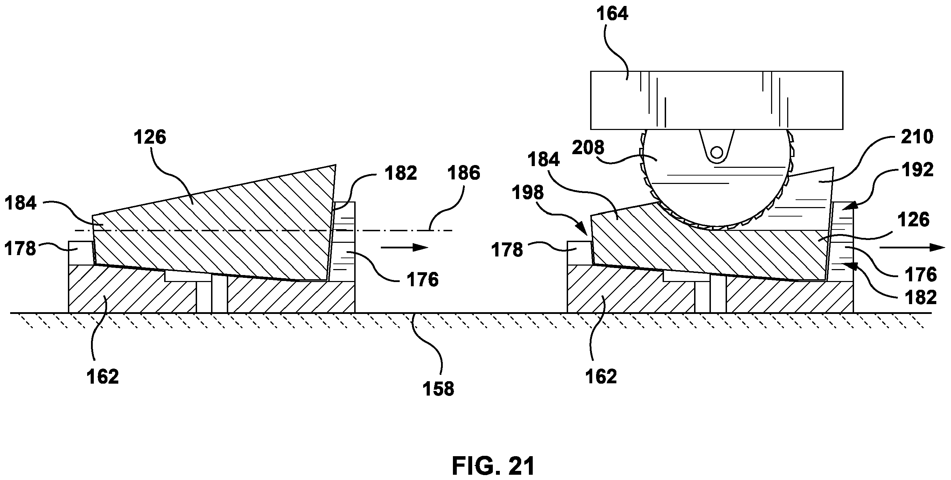

Referring also to Figure 21, in the present example, the soil plugs 126 are asymmetrical and have an generally tapered configuration and extend axially along a plug axis 186 between an upper end 182 (with reference to the orientation of the soil plug when planted in the ground) that is larger than the longitudinally opposed lower end 184. To help accommodate soil plugs of this configuration, the cavity 170 is similarly tapered, with its front end 188 being larger than its rear end 190, and the side walls 174 taper from front to back. The bottom wall 172 may be inclined (see Figure 19) to help accommodate the 3D, tapered configuration of the soil plugs 126. In some embodiments, the plug carrier 162 is suitable for receiving soil plugs 126 with a length of about 43 mm, a maximum width 304 of about 16 mm and a volume of about 12 cc. Other sizes of soil plugs 126 can also be used with plug carriers 162 of different dimensions.

Optionally, to help facilitate the placement of the soil plug 126 within the cavity 170 the side walls 174, and optionally the end walls 176 and 178, may be tapered in a top/bottom direction, such that the open upper end of the cavity 170 is slightly larger than the bottom wall 172.

Optionally, the plug carriers 162 can be configured so that the soil plugs 126 can be longitudinally slit while being retained within the plug carrier 162. To help accommodate the activities of the plug slitting module 164, one or more of the walls bounding the cavity 170 may be sized so as to avoid interference with the plug slitting module 164, and/or may include one or more relief regions to accommodate the plug slitting module 164.

Referring to Figures 16, 18 and 20, in the illustrated example the plug carriers 162 include a front relief formed as a gap 192 in the front wall 176 and having gap sidewalls 194 that are laterally spaced apart from each other by a width 196 that is sufficient to accommodate a cutting tool or other such portion of the plug slitting module 164. A corresponding rear relief is formed as a gap 198 having sidewalls 200 that are spaced apart by a width 202. Optionally, the width 202 may be the same as, or different than the width 196. Optionally, the sidewalls 200 may be parallel to and/or coplanar with the sidewalls 194. The portion of the cavity 170 extending between the gaps 192 and 198 is also generally free of obstructions and/or intervening material, such that a generally clear cutting path is provided between the gaps 192 and 198 to receive the slit cutting tool.

For example, referring also to Figure 21, the arrangement of the soil plugs 126 can allow the cutting blade 208 on the plug slitting module 164 to pass through the gaps 192 and 198 and to cut a longitudinally extending slit 210 in an exposed, upper portion of the soil plug 126 as the plug 126 and carrier 162 are translated past the plug slitting module 164 via the conveyor track 158.

In this example, the plug carriers 162 can define a carrier axis 204 (Figure 16) that extends between the front and rear walls 176 and 178. When the plug carrier 162 is mounted to the conveyor track 158, the carrier axis 204 may be at least substantially parallel to the conveyor axis 160.

Optionally, the plug carriers 162 may include an aperture, such as ejection aperture 206 (Figures 17 and 20) that can allow an ejection actuator (such as pneumatic actuator, solenoid, blast of compressed air or gas, or the like) to pass through the bottom wall 172 and enter the cavity 170 to mechanically dislodge a soil plug 126 from within the cavity 170. This may be desired if a defect in the soil plug 126 is noticed after the soil plug has already been positioned within the cavity 170, or if the soil plug 126 is damaged or otherwise rendered undesirable after having been placed in the cavity 170. For example, if the slit cutting operation or seedling insertion process damages the soil plug 126.

In the illustrated example, the plug carriers 162 are of integral, one-piece construction and are formed out of acrylic plastic, although they can also be metal. Alternatively, the plug carriers 162 may be formed from more than one piece.

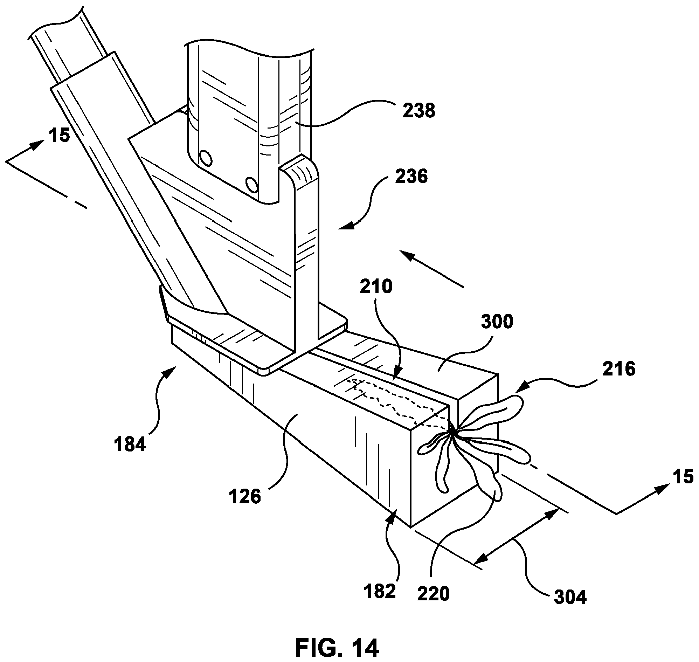

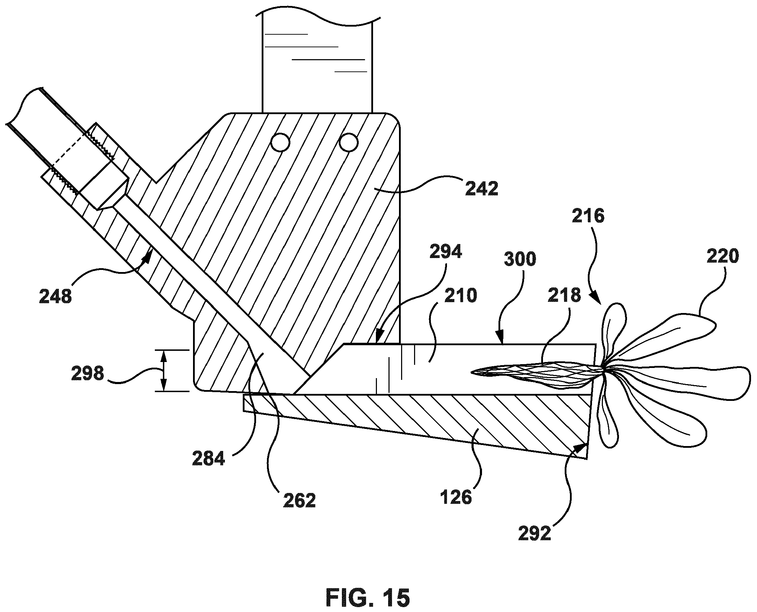

After having been conveyed past the plug slitting module 164, the soil plugs 126, now including a longitudinally extending slit 210 (see also Figures 14 and 15), are conveyed to the seedling handling module 106 to receive a seedling.

### SEEDLING HANDLING MODULE

To help facilitate the inserting of each seedling into a respective soil plug 126, the system 100 can include any suitable apparatus and/or mechanism that is operable to manipulate the seedlings and insert them in the soil plugs 126. In some embodiments, all or at least substantially all of the seedling handling can be automated. Alternatively, some aspects of the seedling handling processes described herein may be manually performed by system operators. Optionally, the system 100 may also be configured to automatically inspect the seedlings and identify those that are suitable for planting and those that are not. This inspection may be done at a variety of locations in the overall process described herein, and may be provided in a variety of different modules/portions of the system 100. For example, the seedlings may be inspected as they enter the washing module 102, while they are conveyed along the intermediary conveyor 116, while they are in the seedling handling module 106 and/or after they have left the seedling handling module 106.

Referring to Figures 3-5, in the illustrated example the seedling handling module 106 is positioned such that it can receive soil plugs 126 being conveyed by the main conveying module 156, and is downstream from the media handling module 104. The seedling handling module 106 is also downstream (with reference to the intermediary conveyor 116) from the washing module 102, and is configured to combine the inputs from these modules 102 and 104.

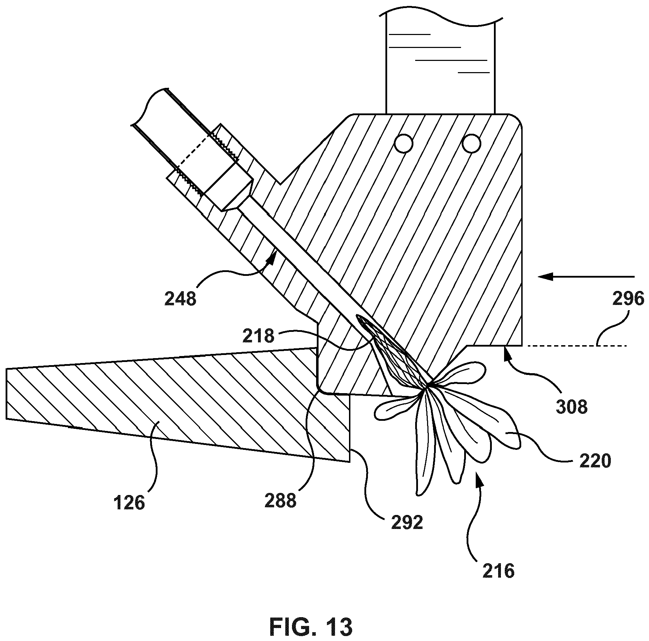

In the illustrated example, the seedling handling module 106 includes a seedling pick-up station 212 that includes a pick-up table 214 for receiving and temporarily holding a plurality of seedlings 216. As noted herein, each seedling 216 can include a root portion 218 (see also Figures 13-15) and a stem portion 220. The pick-up table 214 may be of any suitable configuration, and in this embodiment is a generally circular, planar table that can rotate about a table axis 222 (Figure 4). In this arrangement, seedlings 216 resting on the table 214 can rotate with the table 214 to move through the pick-up station 212. This may help move the seedlings 216 into one or more desired pick-up locations and/or may help the system 100 accommodate additional incoming seedlings 216 on the table 214 when in use. For example, in the illustrated example, the pick-up table 214 includes a receiving region 213 where seedlings 126 are deposited onto the pick-up table, a pick-up region 215 where seedlings 126 are grasped by a suitable pick-up apparatus, and an ejection region 217 where seedlings 126 that are not picked-up can be ejected from the pick-up table 214 (this may help prevent fouling and/or clogging of the system 100). These regions may be generally discrete regions on the pick-up table 214, or may at least partially overlap each other. For example, the pick-up region may 215 may partially overlap one or both of the receiving region 213 and the ejection region 217.

In addition to the pick-up table 214, the seedling handling module 106 also preferably includes at least one automated seedling handling apparatus that can pick up individual ones of the seedlings 216 and move them to another portion of the system 100 for further handling/ processing. Optionally, the automated seedling handling apparatus can include a robot, which may be generally the same as the media handling apparatus 134 or may be a different apparatus. The seedling handling apparatus may be, for example, any suitable multi-axis robot, an articulated robot arm and the like that can perform a variety of tasks and movements. One example of a suitable robot that can serve as the media handling apparatus is the ABB pick and place robot (IRB 910 SC - 3/0.55).

Referring to Figures 3-5, in the illustrated example the system 100 includes a seedling handling apparatus in the form of a robot 224 that includes a base 226, a first linkage 228 that is pivotable relative to the base 226 about a first axis 230, a second linkage 232 that is pivotable relative to the first linkage 228 about a second axis 234 and an end effector 236 that is operable to pick-up individual seedlings 216. The end effector 236 is, in this example a suction gripper described in more detail here that can grip the seedlings 216 via suction. The end effector 236 is connected to the second linkage 232 via a connector rod 238 that can both rotate about and translate along a third axis 240. This can enable the end effector 236 to be moved closer to and farther away from the pick-up table 214, and the rotation can enable the end effector 236 to align the seedling 216 in a desired orientation when being inserted into corresponding soil plug 126. The robot 224 can be controlled by the controller 122 or any other suitable control mechanism. While one example of the robot 224 has been illustrated, other suitable robots and mechanisms may be used in other embodiments.

Preferably, the seedling handling module 106 can include an automated inspection apparatus that is configured to inspect/ analyze the seedlings 216 that are resting on the pick-up table 214 to identify seedlings 216 that are suitable for further use in the system 100 and, if necessary, identify seedlings 216 that are damaged, misshapen or are otherwise unsuitable for further use. For example, a seedling that is lacking a root portion 218 or stem portion 220, may be unsuitable for inserting in a soil plug 126. To help prevent such seedlings 216 from proceeding through the system 100, the robot 224 may be operated to pick only acceptable seedlings 216 from the pick-up table 214, and to leave any unwanted seedlings 216 on the pick-up table 214 for removal/disposal. For example, suitable seedlings may include a stem portion 220 with a shoot and one or more leaves or needles and a root portion 218 that is for example about 10 mm to about 50 mm in length (e.g. where the radicle is for example between about 10 mm and about 50 mm in length, optionally between about 10 mm and about 40 mm in length). In some embodiments, the size of the lateral roots are also considered.

Optionally, the automated inspection apparatus may include any suitable type of sensor or other detection mechanism to inspect and differentiate between the seedlings 216 on the pick-up table 214. The apparatus may be the same as, similar to or different than the system used to inspect the soil plugs 126. Optionally, a single inspection system may be used to inspect both the soil plugs 126 and the seedlings 216, and may be configured to perform all of the functions described herein. Alternatively, the system for inspecting the seedlings 216 may be at least partially separate from the system for inspecting the soil plugs 126. This may be convenience as each system may then be configured to focus on attributes/ features that are unique to the type of object being inspected.

For example, an automated inspection apparatus for use in the seedling handling module 106 may include a camera or other type of optical sensor, a weight or mass based sensor, an IR or light based sensor or the like for determining the condition of the seedlings 216. In the illustrated example, the seedling handling module 106 includes an inspection apparatus having a camera 152 (Figure 3) that is positioned so that it can see the seedlings 216 on the pick-up table 214.Optioanlly, the camera 152 may be positioned so that it sees seedlings 216 locating in the receiving region 213, but does not inspect seedlings 216 that have moved to the pick-up region 215 or ejection region 217. This may help facilitate operation of the system 100, as the camera 152 may have a relatively unobstructed view of the seedlings in the receiving region 213 and its field of view will not be obstructed by the activity of seedling handling apparatus 224. Alternatively, the camera 152 may be configured so that it can view and inspect seedlings 216 in multiple regions of the pick-up table 214, and optionally may be configured to view the entire surface of the pick-up table 214.

The camera 152 can be connected to the controller 122, for example via wire 154 or wirelessly, which may control the camera 152 and/or may process the images captured by the camera 152. For example, the controller 122 may include an image processing module that may be operable to, for example, compare the images of the seedlings 216 to pre-set reference images or selected parameters and to designate a seedlings 216 as being acceptable if it conforms to the reference images or selected parameters (within a given tolerance), and to flag a seedlings 216 as being unacceptable if it does not match the desired reference image or the selected parameters. For example, the image processing module may use a blob tool to identify seedlings 216. The identification can comprise one or multiple assessments, for example seedlings 216 that meet an area threshold or range, and/or optionally a color threshold or range, can be identified or further assessed or graded. For example, images of seedlings 216 can first be located in a primary screen and then assessed for area, elongation and/or spread as described for example in Example 1.

Once designated as acceptable, the system 100 may then track the location of a given, target seedling 216 on the pick-up table (optionally via the camera 152 and controller 122) so as to be able to direct the robot 134 to pick-up the desired seedlings 216 and avoid the unwanted seedlings 216.

For example, after designated as acceptable, the system 100, optionally via the camera 152 and controller 122, may identify the position and orientation of the desired seedling 216 by creating a rectangular bounding box that constrains the seedling to determine the angle of the seedling (e.g. the angle of the box in a Cartesian plane) to tell the robot the orientation for pickup.

In some embodiments a filter may be used, to help eliminate bright specks or other noise from the image.

Seedlings 216 that are not selected for further processing can remain on the pick-up table 214 and travel into the ejection region 217. The seedling handling module 106 can include an ejection apparatus that is operable to eject the unwanted seedlings 216 from the ejection region 217 so that they do not continue rotating and re-enter the receiving region 213. The ejection apparatus can include a mechanical pushing or scrapping mechanism that can engage the seedlings 216 travelling on the pick-up table 214, an air knife or other concentrated blast of air that pushes the seedlings 216 off of the pick-up table 214 and the like. A similar mechanism can be used on the media handling module 104. Suitable seedlings are optionally identified according to the method provided in Example 1.

### SUCTION TIP

To pick up a given seedling 216 from the pick-up table 214, the optionally, the end effector on the seedling handling apparatus, robot 224, may be any suitable type of manipulator that can grasp and manipulate the seedlings in a desired manner, and preferably without damaging the seedlings or their root structure. For example, the end effector may include a manually gripper or the like. Another example of an apparatus for handling the seedlings is a vacuum or suction based manipulator that can hold, carry and manipulate the seedlings using suction to hold the seedlings in place. Optionally, the end effector can be configured to engage primarily the root portion 218 of the seedling 216, and may or may not be configured to exert suction on or otherwise engage the stem portion 220 of the seedling 216. For example, the end effector may be configured to engage the root portion 218 and at least some of the stem portion 220 (for example some of the stem portion 220 that is adjacent the root portion 218) and may not directly engage the remainder of the stem portion 220.

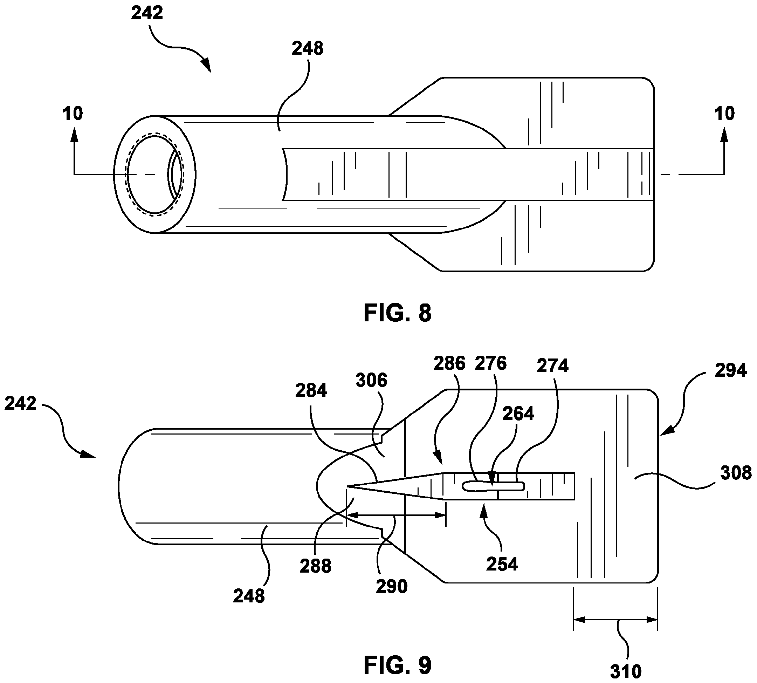

Referring to Figures 8 to 11, one example of a vacuum handling apparatus 242 that can be used as the end effector 236 on the seedling handling apparatus (e.g. robot 224) includes a body 244 having an attachment portion 246 that is connectable to a driving member, such as the connector rod 238 of the robot 224. In this example, the attachment portion 246 includes apertures 247 for receiving a fastener, such as a bolt or screw, but may have other configurations in other embodiments.

The apparatus 242 also includes a vacuum channel 248 that has an upper, first end 250 that is configured to be fluidly connected to a suitable vacuum generator, for example via a flexible hose 252.

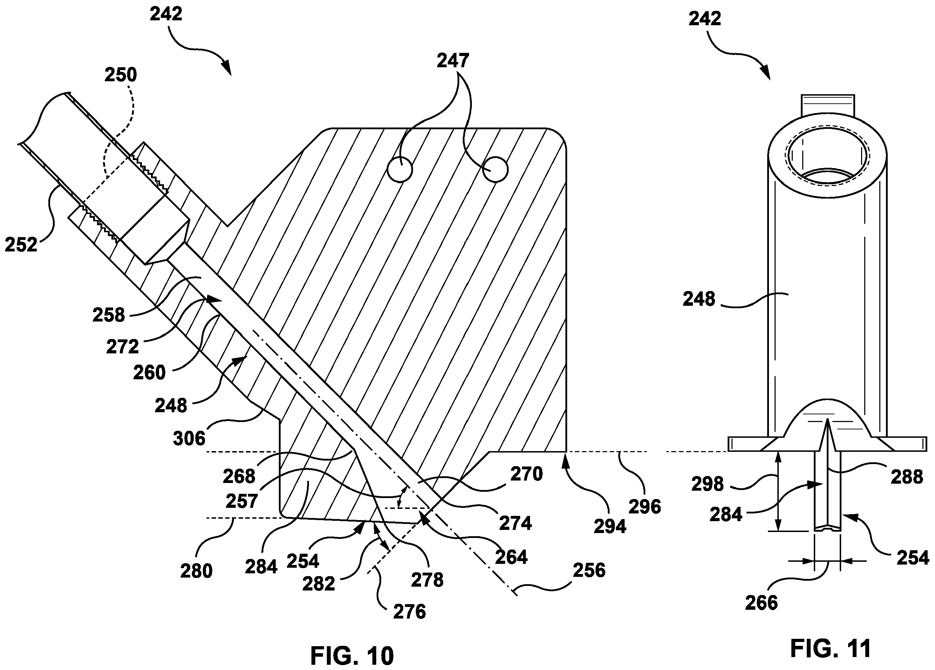

The opposing end of the vacuum channel 248 is configured as a lower, open tip 254 that is spaced apart from the first end 250 along a channel axis 256, that is inclined relative to a horizontal plane at an oblique angle 257 (Figure 10). The channel axis angle 257 may be between about 35 degrees to about 60 degrees, from about 40 degrees to about 55 degrees, about 45 degrees to about 50 degrees or any angle between 35 degrees and 60 degrees, and may be about 45 degrees, about 46 degrees or about 47 degrees. In the illustrated example, the vacuum channel 248 is substantially linear, as is the channel axis 256. This may help facilitate manufacturing of the apparatus 242 as the vacuum channel 248 may be formed as a generally linear bore, with optional additional machining being conducted at its ends as desired. A linear vacuum channel 248 may also help facilitate air flow through the vacuum channel, which may help reduce backpressure in the vacuum system. Alternatively, the vacuum channel 248 need not be linear, and may be curved or the like. In such embodiments, the channel axis 256 may be defined locally at the upper end 250 and tip 254 as being generally parallel to the direction that air travels through the vacuum channel at that location (i.e. being generally parallel to the flow direction of air through the channel).

Referring to Figure 10, the vacuum channel 248 in this example has a hollow channel interior 258 providing fluid communication between the tip 254 and the upper end 250, and that is bounded by an inner channel surface 260.

The tip 254 of the apparatus 242 is preferably configured to receive some or all of a seedling 216 that is being manipulated, and preferably can help facilitate the pick-up of the seedlings 216 from the pick-up table 214. The tip 254 may have different configurations in different embodiments (for example to accommodate seedlings of different sizes and/or configurations), but in the illustrated example terminates in a rim 262 that surrounds a tip aperture 264. The tip aperture 264 may be any suitable shape, including round, and in the present example is a generally oval-like, oblong configuration. Configuring the tip apertures 264 in this manner may help provide a desired flow area/ size of the tip aperture 264 while helping to reduce the lateral width 266 of the tip 254 (Figure 11). As explained in further detail herein, in some embodiments some or all of the tip 254 may be inserted into a soil plug 126 during the seedling insertion process. In such instances, reducing the lateral width 266 of the tip 254 (i.e. at least the portion that is to be inserted within a soil plug 126) may help reduce the amount of impact the tip 254 has on the soil plug 126, and may help reduce the width the slit 210 needs to be opened to receive the seedling 216. Reducing the width that the slit 210 is spread by the tip 254 may help reduce damage to the soil plug 126, may help facilitate closing of the slit 210 when the tip 254 exits the soil plug 126 (for example if the soil plug 126 is resilient it may generally self-close if not spread beyond its elastic limits), and may help facilitate stripping of the seedlings from the apparatus 242 by helping to increase the likelihood of engagement between the stem portion 220 and the end face of the soil plug 126 (as described herein).

Optionally, the tip 254 can be configured so that the tip aperture 264 lies in more than one plane. That is, the tip aperture 264 may have at least two different regions that are provided in different planes. This may help reduce the likelihood of the aperture 264 becoming completely blocked, for example if pressed against a surface. This may also help increase the chances that a root portion 218 can be drawn into the tip aperture 264 in a variety of orientations.

Optionally, the interior 258 of the vacuum channel 248 may be slightly larger toward the tip 254 than it is toward the upper end 250. This may help facilitate sucking the root portion 218 into the tip 254, and may help facilitate sucking the root portion 218 into the tip 254 in a wider variety of alignments/ orientations of the apparatus 242 relative to the seedling 216. For example, the robot 224 may be operated such that when attempting to grasp a seedling 216 the apparatus 242 is rotated about axis 240 so that the vacuum channel 248 is generally aligned with the direction the root portion 218 of the seedling 216 is extending. However, in some instances the root portion 218 may have a non-linear arrangement or the apparatus 242 may not be exactly aligned with the root direction. In such instances, providing a relatively wider/larger tip aperture 264 may help facilitate the desired engagement and capture of the root portion 218. This arrangement may also help facilitate engagement of the root portion 218 if the apparatus 242 contacts the root portion 218 at various locations along its length. Preferably, the apparatus 242 can be positioned adjacent the tip of the root portion 218 of a given seedling 216, and the vacuum suction can draw the root portion 218 longitudinally into the channel interior 258. In other instances, the tip 254 may engage a root portion 218 at an intermediate location (i.e. somewhere between its free tip and the stem portion 220). Providing a tip 254 with a rim 262 and tip aperture 264 as described herein may, in some embodiments, help increase the likelihood that a root portion 218 engaged in such an intermediate location will be sucked into the channel interior 258.

Referring to Figure 10, in the illustrated example, the tip 254 is configured such that the rim 262 has a first portion 274 that lies in a first plane 276 and a second portion 278 that lies in a second plane 280 that is not parallel to the plane 276, and intersects plane 276 at an oblique intersection angle 282. The intersection angle 282 may be for example from about 35 degrees to about 60 degrees, from about 40 degrees to about 55 degrees, about 45 degrees to about 50 degrees or any angle between 35 degrees and 60 degrees such as about 45 degrees, about 46 degrees, about 47 or about 48 degrees. In this example, the rim 262 is configured such that the line of intersection of the planes 276 and 280 is offset from (i.e. is not intersected by) the channel axis 256, and that the channel axis 256 is generally orthogonal to the plane 276. This may help provide the desired tip 254 configuration described herein.

Preferably, the tip aperture 264 can be sided to generally freely receive the root portion 218 of a seedling 216, such that the root portion 218 can be relatively easily sucked into the vacuum channel 248 and relatively easily removed from the vacuum channel 248 when desired. That is, when the apparatus 242, and specifically the tip 254 is positioned proximate the root portion 218 of a seedling 216 on the pick-up table 214 and vacuum is applied to the vacuum channel 248 the root portion 218 will be sucked into the channel interior 258. The tip aperture 264 is also sized so that its flow area (i.e. a cross-sectional area taken in a plane that is generally orthogonal to the direction air flows into the channel interior 258 - i.e. orthogonal to the channel axis 256 in this example) is smaller than the expected size of the stem portion 220 of the seedlings 216 to be manipulated. Sizing the tip apertures 264 to be smaller than the stem portion 220 may help prevent the seedlings 216 from being completely sucked inside the vacuum channel 248. For example, in the present embodiment, the root portion 218 may be sucked into the vacuum channel 248 until a non-root portion of the seedling 216 contacts and abuts the rim 262 (and/or surrounding portions of the tip 254). When the non-root portion abuts the rim 262 further movement of the seedling 216 into the vacuum channel 248 may be inhibited and/or prevented. That is, when a seedling 216 is fully seated within the apparatus 242, the root portion 218 may be contained within the vacuum channel 248 while at least some of the non-root portion remains exposed and external the vacuum channel 248. For example, the seedlings 216 may be drawn into the vacuum channel 248, and optionally at least a portion of the stem portion 220 may also be drawn into the vacuum channel 248, until there is contact between some of the stem portion 220 and the rim 262. In some embodiments, parts of the stem portion 220 that are adjacent the root portion 218 and have a similar size may be drawn into the vacuum channel 248 until other, generally wider parts of the stem portion 220, such as the leaves and/or needles and the like, abut the rim 262 and restrain the movement of the seedling 216. In such an arrangement, movement of the seedlings 216 into to the suction channel 248 can be referred to as being inhibited by engaging the stem portion 220, even though some parts of the stem portion 220 are in fact received within the suction channel 248. A similar understanding applies when discussing stripping of the seedlings 216 from the suction channel 248, inserting the seedlings 216 into the soil plugs 126 and the like. For example, there may be engagement between an end face of a soil plug 126 and the stem portion 220 of a seedling 216, such as the leaves or needles, even if part of stem portion 220 (i.e. some of the non-root material) is actually received inside the soil plug 126.

In the illustrated example, the vacuum channel 248 includes a generally narrowing throat portion 268 (Figure 10) that separates a relatively larger region 270 of the interior from a relatively smaller region 272. The throat portion 268 is illustrated as being closed to the tip 254 than the upper end 250, but may be in other locations in other embodiments. The relatively larger region 270 may also help facilitate a desired level of air flow around the root portion 218 (when a root portion 218 is received in the tip 254) which may help prevent choking or throttling of the vacuum channel 248, and may in some instances help prevent the root portion 218 from blocking air flow through the vacuum channel 248 an being subjected to the blockage/ break suction force.

Having picked-up a target seedling 216 to be planted, the robot 224 can move the end effector 236, including apparatus 242, into an insertion location, in which the apparatus 242 is positioned above a corresponding soil plug 126 (held in a carrier 162 on the conveyor track 158. To deposit the seedling 216 into the soil plug 126, a portion of the tip 254, and optionally the entire tip 254, can be inserted into the soil plug 126. The tip 254 can then be used to help spread open the slit 210 in the upper side of the soil plug 126 so that the seedling 216 can be placed in the interior of the soil plug 126. When the tip 254 is removed from the slit 210, the resilient nature of the soil plug 126 (or an external closing force) may tend to urge the slit 210 closed, thereby enclosing the root portion 218 of the seedling 216 within the soil plug 126.

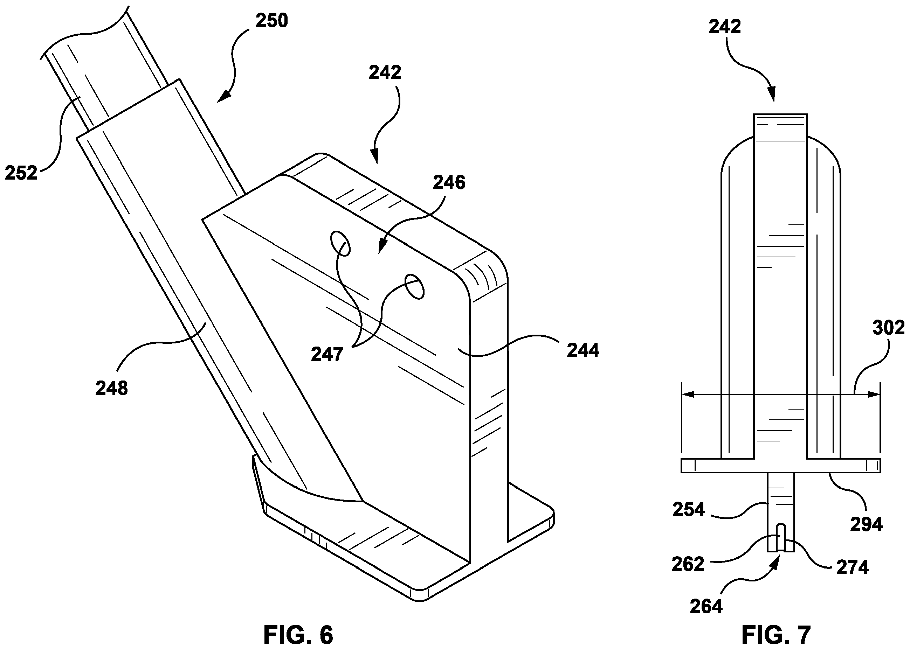

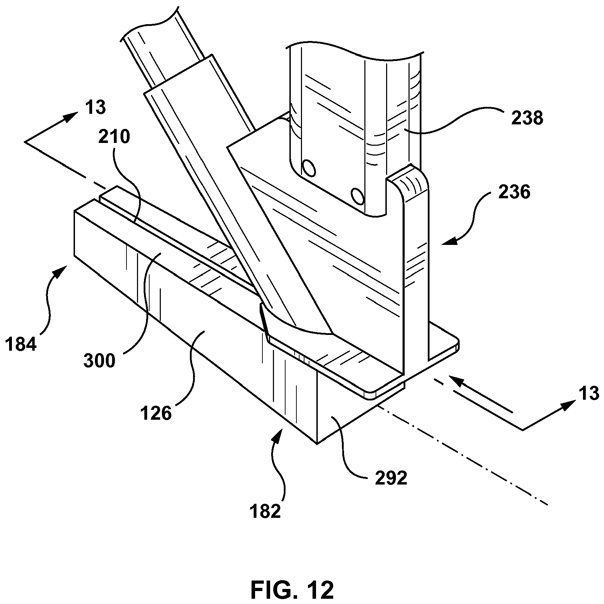

The tip 254 may have any suitable configuration to help facilitate the seedling 216 insertions, and one example of the tip 254 design is shown on the apparatus 242 of Figures 6-11, and its use when inserting a seedling in a soil plug is schematically illustrated in Figures 12-15. In this example, in addition to the tip aperture 264, the tip 254 includes a generally wedge-like ploughshare portion 284 that is positioned adjacent the tip aperture 264 and located such that it will lead (i.e. travel in advance of) the tip aperture 264 if the apparatus 242 is translated relative to a soil plug 126 with the tip 254 inserted in the soil plug 126 (i.e. from right to left as illustrated in Figures 10, and 12-15). With reference to the direction of translation of the apparatus 242, the ploughshare portion 284 can be considered to be forward of the tip aperture 264.

The ploughshare portion 284 is intended to extend into the slit 210 in the soil plug 126 and to be translated along the length of the slit 210 to help spread/open the slit 210 in advance of the arrival of the tip aperture 264 and the seedling 216 held therein. The ploughshare portion 284 may have any suitable configuration, and in the illustrated example is a generally tapered, wedge-like member that has a base 286 adjacent the lower tip 254, and tip aperture 264, and a leading edge 288 narrower than and that is spaced forwardly from the base 286 by a ploughshare length 290. In this example, the ploughshare portion 284 generally tapers from the base 286 to the leading edge 288. Referring to Figure 11, the base 286 of the ploughshare portion 284 has the same width 266 as the tip 254. In other embodiments the ploughshare portion 284 may have a different configuration.

To insert a seedling 216, the tip 254 and ploughshare portion 284 are inserted into the slit 210, and the apparatus 242 is translated axially relative to the soil plug 126 (or vice versa). Figures 12 and 13 illustrate the apparatus 242 toward the beginning of the insertion process, in which the leading edge 288 of the ploughshare portion 284 is beginning to engage and widen the slit 210, while the tip 254 and seedling 216 remain spaced from the soil plug 126. Optionally, the apparatus 242 can be maneuvered such that the ploughshare portion 284 is vertically inserted into the slit 210, or so that the ploughshare portion 284 is positioned at the desired elevation and then translated horizontally to engage the slit 210.

As the insertion process advances, the apparatus 242 is translated along the length of the soil plug 126, whereby the ploughshare portion 284 continues to open the slit 210 and the tip 254 moves into engagement with the soil plug 126.

To help transfer the seedling 216 from the apparatus 242 to the soil plug 126 the seedling 216 can be stripped from the vacuum channel 248. In some embodiments, the apparatus 242 may include a stripping apparatus that can extract the seedling 216 from the vacuum channel 248. For example, a mechanical gripper or the like may be used to manually extract the seedling 216 from the vacuum channel 248. Alternatively, the pressure in the vacuum channel 248 may be reduced, such that pressurized air is introduced into the channel 248 to blow the seedling 216 out of the channel 248. Optionally, pressurized air may also be blown through the vacuum channel 248 while the channel 248 is empty. This may be used to help clean the vacuum channel 248 and dislodge any debris that may accumulate within the vacuum channel 248. Optionally, this pressurized air cleaning step can be conducted after each seedling insertion, after a pre-determined number of seedling insertions (such as after every 10, 100 etc.), at another desired frequency and/or manually upon user input.

In yet other embodiments, the seedling 216 may be stripped from the vacuum channel 248 by engagement with an external surface or apparatus.

In the illustrated example, the tight fit between the tip 254 and the slit 210 may open the slit 210 to a width that is wider than the root portion 218 (e.g. at least the radicle) of the seedling 216, but is less than a width/area of the stem portion comprising leaves and/or needles 220. In this arrangement, the tip 254 and seedling 216 may move through the interior of the soil plug 126 together until the stem portion 220 comes into contact with the end face 292 at the upper end 182 of the soil plug 126. When the stem portion 220 abuts the end face 292, translation of the seedling 216 through the slit 210 can be inhibited. As the apparatus 242 continues to translate, the root portion 218 is extracted from the vacuum channel 248 and is deposited within the slit 210. When the apparatus 242 is moved such that the root portion 218 is completely removed from the vacuum channel 248, as shown in Figures 15 and 16, the tip 254 can be withdrawn from the soil plug 126 leaving the seedling 216 behind.

Using the engagement between the stem portion 220 and the soil plug 126 to strip the seedling 216 from the apparatus 242 can help accommodate for variations in seedling sizes, roots lengths, stem configuration and the like.

Optionally, the apparatus 242 may include more or more additional bearing surfaces that are intended to contact the soil plug 126 during the insertion process. For example, the apparatus 242 may contact the soil plug 126 to help keep the soil plug in position while the tip 254 and ploughshare portion 284 are being dragged through the slit 210. In the illustrated example, the apparatus 242 includes a flared, base surface 294 that is generally downward facing when the apparatus 242 is in use, and lies in a plane 296 (Figure 10) which, in this example, is parallel to and offset from the plane 280.

The base surface 294 is positioned such that the tip 254 and ploughshare portion 284 extend beyond the base surface 294 by a desired depth 298 (Figure 11). The depth 298 can be selected so that the base surface 294 can bear against (or at least be closely offset from) an upward facing surface 300 of the soil plug 126 (Figures 12 and 15). In some instances, the tip depth 298 may be equal to, or optionally less than, the depth of the slit 210.

The base surface 294 also has a width 302 (Figure 7) that can be selected so that it is equal to or greater than a maximum width 304 (Figure 14) of the soil plug 126, or alternatively may be less than the plug width 304. In some embodiments, the width 302 of the base surface may be about 12, about 13, about 14, about 15 , about 16, about 17 or about 18 mm.

Preferably, the apparatus 242 is configured so that the base surface width 302 is greater than the tip width 266 (Figure 11), and may be configured so that the tip width 266 is between about 5% and about 25% (i.e. less than 25%) of the base surface width 302, and may be between about 10% and about 20% or between about 12% and about 16% of the width 302, and may be about 15% of the width 302.

Optionally, the apparatus 242 may include an inclined ramp surface 306 positioned where the leading edge 288 of the ploughshare portion 284 meets the rest of the body (Figures 9 and 10). The ramp surface 306 may be inclined relative to the plane 296 and may help inhibit soil and other debris from accumulating on the apparatus 242, and in some embodiments may help prevent the apparatus 242 from snagging or otherwise damaging the soil plugs during the insertion process.

Optionally, the base surface 294 can include an overhanging shelf portion that can extend rearwardly (relative to the direction of translation of the apparatus 242) beyond the tip 254 and overhang the stem portion 220 of a seedling 216 being carried. This may help inhibit portions of the soil plugs 126 and/or portions of the seedlings 216 carried in the apparatus 242 from curling up and/or wrapping upwardly around the trailing edge of the tip 254. For example, if a stem portion 220 of a seedling 216 were to curl substantially upwardly, the stem portion 220 could arrive at a position where it is above the slit 210 in the soil plug 126. In such a configuration, the stem portion 220 may fail to engage the end face 292 of the soil plug 126, thereby inhibiting stripping of the seedling 216 from the vacuum channel 248. This could result in the seedling 216 being pulled completely through the soil plug 126 and failing to remain inserted in the plug. In the illustrated embodiment, the base surface 294 includes a shelf portion 308 that extends rearwardly of the tip 254 by an offset length 310.

Optionally, the seedling handling apparatus, e.g. robot 224 can have a seedling pick rate "P" that can be expressed in number of seedlings that can be picked and inserted into corresponding soil pods within a given time period, such as one minute. For example, the seedling handling apparatus may be operable to pick and insert about 20 to 60 seedlings per minute.

Optionally, the rotation of the pick-up table may be coordinated with the seedling handling apparatus, for example by configuring the controller accordingly. For example, it may be desirable in some embodiments that a given seedling only travel on the pick-up table for one revolution, before being ejected. This may help the system 100 operate a desired production rate. That is, a batch of seedlings, containing n seedlings may be deposited in the deposit region of the pick-up station, and may rotate with the pick-up table. The system can optionally be configured so that the pick-up table rotates slowly enough such that if each of the n seedlings is identified as being acceptable for inserting in a soil pod, the seedling handling apparatus will have enough time to pick and insert each seedling before the seedlings reach the ejection region. To help provide sufficient time for the seedling handling apparatus to pick each seedling, the pick-up table may be rotated at a rate that is less than or equal to n/P revolutions per minute. For example, if 30 seedlings are provided on the pick-up table and if the seedling handling apparatus has a picking rate P of 60 seedlings per minute, the pick-up table can rotate at a speed of up to about 2 rpm or less to and still allow sufficient time for the seedling handling apparatus to pick all of the seedlings before they reach the ejection region.

While described with reference to the seedling handling module 106, the media handling module 104 may have an analogous configuration, based on a pick-rate of the media handling apparatus.

While illustrated as separate modules in the present example, in other embodiments of the system 100 the mechanism for cutting slits (e.g. plug slitting module 164), or other suitable formations, in the soil plugs 126 may be provided as part of the seedling handling module 106, and optionally may be mounted on and may be movable with the end effector 236 of the robot 224. For example, an end effector may be configured to include a cutting mechanism positioned such that it would lead the ploughshare portion when the end effector 236 is translated relative to a soil plug 126. In such an arrangement, the soil plug 126 may be slit and receive a seedling 216 in what is effectively a single step in the process. In other embodiments, the system 100 need not include a separate plug slitting module 164, but instead the end effector 236 may be used to insert a seedling 216 into a soil plug 126 that has not been pre-slit. This may not be desirable in some circumstances, as it may tend to damage the soil plugs 126.

### PACKAGING MODULE

After the seedlings 216 have been received in respective soil plugs 126, the soil plugs 126 can be further conveyed by the conveyor track 158 to the packing module 108. The packing module 108 may optionally include an automated packing apparatus that can pick the soil plugs 126 out of their carriers 162 and insert the soil plugs 126 into a container or tray for further processing and/or shipping to a customer.

Referring to Figures 3-5, In the illustrated example, the packing module 108 includes an automated, gantry style robot 312 (such as a **Linear axis apparatus model:** EGC-80-600 (Festo) that has an end effector in the form of a mechanical gripper 314, with opposing, movable tines 316 for grasping the outer surface of the soil plug/ seedling combinations. In the illustrated example, the soil plugs 126 are arranged generally horizontally in their carriers 162, and the robot 312 has at least one pivot axis 318 that can allow the gripper 314 to pivot about 90 degrees. This can allow the gripper 314 to grasp the soil plugs 126 in their generally horizontal arrangement (Figure 5) and to deposit the soil plugs 126 into a corresponding cavity 320 in a holding tray 322 in a generally vertical orientation (i.e. with the stem portion 220 above the root portion 218 - Figure 4). Optionally, either the tray 322, robot 312 or both can be movable to allow the gripper 314 to deposit soil plug/ seedling combos into each cavity 320 in the tray 322. When the tray 322 is full, it may be moved for further processing and another tray 322 provided.

Referring to Figures 16, 17 and 19, the carriers 162 may be configured to help facilitate gripping and removal of the soil plugs 126 using the gripper 314. In this example, in addition to the front and rear relief gaps 192 and 198, the sidewalls 174 of the carriers 162 may also include a generally laterally extending gripper relief channel 320 that is sized to receive the tips of the tines 316 on the gripper 314. This can help allow the gripper 314 to grasp the side surfaces of the soil plugs 126 without grasping or otherwise interfering with the carrier 162.

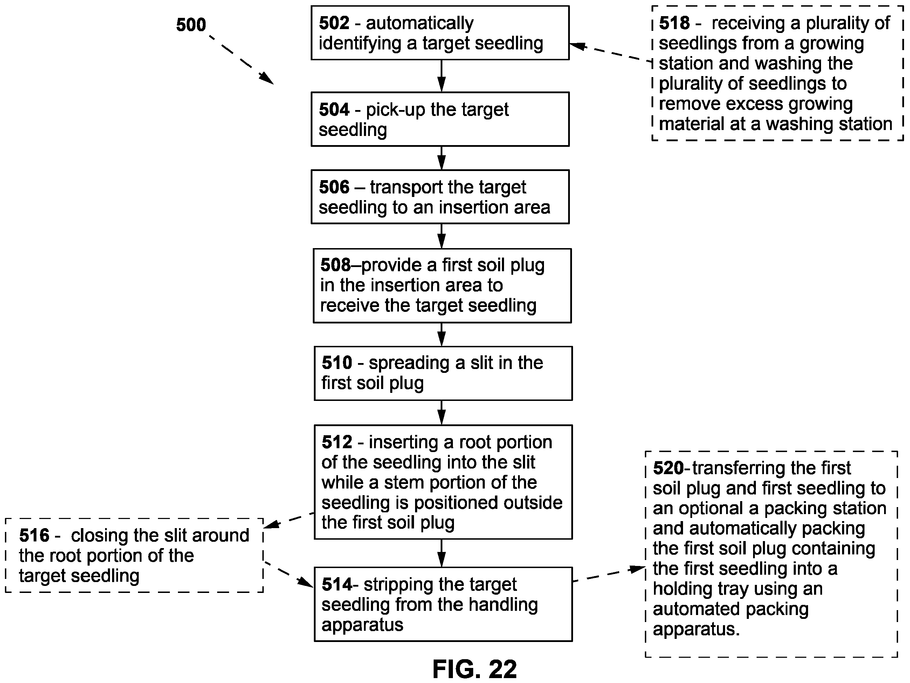

Referring to Figure 22, one example of method 500 of processing/ handling seedlings and specifically for inserting the seedlings in soil plugs. In this example, the method can include the step of, at step 502, automatically identifying a target seedling located in a pick-up area using any suitable seedling detection/inspection apparatus (including those described herein). The method can also include picking-up the target seedling with an automated seedling handling apparatus (step 504) and transporting the target seedling to an insertion area (step 506), which can be a portion of the seedling handling module 106 or any other suitable location. The system can then, at step 508, provide a first soil plug in the insertion area, for example from the media handling module 104, to receive the target seedling.

Step 510 can then include spreading the slit in the first soil plug, and step 512 can include inserting a root portion of the seedling into the slit while a stem portion of the seedling is positioned outside the first soil plug.

With the root portion nested with the soil plug, the method can proceed to step 514 that includes stripping the target seedling from the handling apparatus whereby the seedling remains received within the slit in the first soil plug.

The method 500 may also include a number of optional steps (as indicated by dashed lines), including step 516 that includes closing the slit around the root portion of the target seedling to enclose the root portion within the first soil plug. Optionally, the method can include step 518 that can be performed before step 502 and can include receiving a plurality of seedlings from a growing station and washing the plurality of seedlings to remove excess growing material at a washing station before the plurality of seedlings are positioned in the pick-up area.

Having completed step 514, the combination of the first soil plug and the first seedling can be transferred to an optional a packing station at step 520 and automatically packing the first soil plug containing the first seedling into a holding tray using an automated packing apparatus.

### Examples

### Example 1

### Identifying a target seedling located in a pick-up area using seedling detection apparatus

A machine vision camera, such as the In-Sight® vision system by Cognex Corporation is used in order to locate and grade seedlings as they come into view. The In-Sight vision system software, In-Sight Explorer® allows various parameters to be determined and set based on the desired objects, here seedlings, to be selected. The parameters are selected for example by trial and error and selected according to desired criteria specificity. Preselected seedlings were used to determine suitable ranges for parameters used for selection and grading for example such us as elongation and area, and optionally spread. The settings are selected to reduce the misidentification of debris such as growth gel that may be present in the field and maximize the identification and selection of seedlings. Once the seedlings are found and graded, the best candidate from each image is chosen, and its coordinates are sent to the robot for picking. Each cycle, a new image is taken. An exemplary process using the In-Sight vision system and Explorer software is described below :
1. Each cycle, the camera will take an image. From this image, assuming there are seedlings present, a blob tool is used to select each seedling in the image, up to 30 total. A blob is defined, in this case, of any grouping of touching pixels. Any pixels above the selected colour threshold will cause a discontinuity in the blob. Pixels are evaluated according to the scale below. Criteria used can be:
   a. Area: Between 750 and 13,000 pixels
   b. Color: up to 200 grayscale, out of a maximum of 255 where 0 is black and 255 is white
2. Once the seedlings are found, they can be graded using the following criteria:
   a. Area: Blobs between 2000 and 4000 pixels are accepted (including the root and needles)
   b. Elongation: An elongation between 0.5 and 4.5 is used. Elongation is a determination of how 'stretched' the pixels are from the center of mass (determined from the centroid of the blob). For example, circle would have 0 elongation whereas a long thin line has a high elongation
   c. Spread: Spread is optional. This is a measure of how the pixels are spread out from the centroid. For example, an oval has a greater spread than a circle.
3. Based on step 2 above, the best graded seedling is selected. After selection, a rectangular bounding box is created that completely constrains the seedling. This determines the angle of the seedling (angle of the box in a Cartesian plane to tell the robot the orientation for pickup), as well as the general size. Also, an 'Erode' filter is used, to help eliminate any bright specks or noise from the image.
4. To accurately determine the pick location on the root of the seedling, 6 rectangular regions are created inside the bounding box, approximately %" from the bottom of the bounding box (other locations can also be used). Once each region is created, a Histogram tool is used within. This tool grades the average pixel color.
5. Once all of the Histograms are performed, the region with the lowest pixel color (e.g. region with the darkest area, and typically for example less than 200) is selected as the candidate where the root resides. From this, another Blob tool is used. The centroid coordinate from this resultant blob is used for the pick point sent to the robot. With this coordinate, as well as the above described angle, the robot is able to correctly pick up the seedling.

What has been described above has been intended to be illustrative of the invention and non-limiting and it will be understood by persons skilled in the art that other variants and modifications may be made without departing from the scope of the invention as defined in the claims appended hereto. The scope of the claims should not be limited by the preferred embodiments and examples, but should be given the broadest interpretation consistent with the description as a whole.

## Claims

1. A system for inserting seedlings into soil plugs, the system comprising:
a) a primary transport apparatus;
b) a soil plug station configured to receive a plurality of soil plugs and having a plug handling apparatus to transfer a first soil plug from the soil plug station to the transport apparatus; and
c) a seedling handling station downstream from the soil plug station and configured to receive a plurality of seedlings, the seedling station having a seedling handling apparatus;
wherein the transport apparatus is operable transport the first soil plug from the soil plug station to the seedling station and when the first soil plug is at the seedling station the seedling handling apparatus is configured to insert a first seedling into the first soil plug, preferably wherein the soil plug is a stabilized soil plug comprising a stabilization compound and/or a polymeric compound.

2. The system of claim 1, wherein the seedling handling station comprises a pick-up area to receive the plurality of seedlings and an inspection apparatus configured to inspect the plurality of seedlings in the pick-up area and automatically identify at least one seedling that is acceptable to be selected as the first seedling, optionally wherein the pick-up area comprises a rotatable pick-up table that supports the plurality of seedlings such that the plurality of seedlings rotate with the pick-up table.

3. The system of claim 2, wherein the inspection apparatus comprises at least a first camera to visually inspect the plurality of seedlings and a controller communicably linked to the camera process the visual data received from the camera and identify acceptable seedlings, wherein the controller is configured to identify acceptable seedlings by comparing at least one physical attribute of each seedling to a pre-determined seedling criteria threshold.

4. The system of claim 2 or 3, wherein the seedling handling apparatus comprises a robot having an end effector configured to pick-up seedlings from the pick-up table, optionally wherein the seedling handling apparatus is operable to pick-up seedlings from the pick-up table while the pick-up table is rotating.

5. The system of claim 4, wherein the end effector comprises:
a) a body having an attachment portion that is connectable to a driving member;
b) a vacuum channel comprising a first end fluidly connectable to a vacuum generator, an open tip spaced apart from the first end and a hollow channel interior extending therebetween, the tip terminating in a rim that is sized to slidingly receive a root portion of a seedling and engage a stem portion of the seedling, whereby when a vacuum is applied to the vacuum channel the root portion of the seedling is sucked into the channel interior and the stem portion of the seedling remains outside the vacuum channel.

6. The system of any one of claims 1 to 5, further comprising: a washing station configured to receive the plurality of seedlings and to wash the plurality of seedlings to separate the plurality of seedlings from excess growing material, and a secondary transport apparatus to transfer the washed plurality of seedlings from the washing station to the seedling handling station and/or a packing station downstream from the seedling handling station to receive the first soil plug containing the first seedling and automatically packing the first soil plug containing the first seedling into a holding tray using an automated packing apparatus.

7. A method of inserting seedlings into soil plugs, the method comprising:
a) automatically identifying a target seedling located in a pick-up area using seedling detection apparatus;
b) pick-up up the target seedling with an automated seedling handling apparatus;
c) transporting the target seedling to an insertion area;
d) providing a first soil plug in the insertion area to receive the target seedling, the first soil plug having a first plug end, a second plug end longitudinally spaced apart from the first plug end and a longitudinal slit extending from the first plug end toward the second plug end;
e) spreading the slit in the first soil plug;
f) inserting a root portion of the seedling into the slit while a stem portion of the seedling is positioned outside the first soil plug; and
g) stripping the target seedling from the handling apparatus whereby the seedling remains received within the slit in the first soil plug,
wherein the soil plug is preferably a stabilized soil plug comprising a stabilization compound and/or a polymeric compound.

8. The method of claim 7, wherein the seedling handling apparatus comprises a body having a vacuum channel configured to receive the root portion of a seedling and is operable to pick-up the target seedling by sucking the root portion of the target seedling into the vacuum channel, optionally wherein the method further comprises longitudinally aligning the vacuum channel with the slit, whereby the root portion of the target seedling is oriented substantially parallel to the slit.

9. The method of claim 7 or 8, wherein step f) comprises inserting a tip of the seedling handling apparatus containing the target seedling into the first plug to insert the root portion of the seedling within the slit, optionally wherein the slit in the first soil plug is spread by the seedling handling apparatus.

10. The method of claim 9, wherein the seedling handling apparatus comprises a ploughshare portion proximate the tip and positioned so that the ploughshare precedes the tip as the seedling handling apparatus is translated relative to the first soil plug to spread/open the slit in advance of the tip.

11. The method of claim 9 or 10, wherein step f) is performed while imparting relative, longitudinal movement between the seedling handling apparatus and the first soil plug optionally wherein step f) is performed while translating the tip of the handling apparatus longitudinally through the slit in the first soil plug.

12. The method of any one of claims 7 to 11, wherein the target seedling is mechanically stripped from the handling apparatus in step g), optionally wherein the target seedling translates with the handling apparatus until engagement between the stem portion of the target seedling and the first soil plug inhibits translation of the target seedling relative to the first soil plug, after which continued translation of the handling apparatus strips the target seedling from the handling apparatus.

13. The method of any one of claims 7 to 12, wherein identifying the target seedling comprises inspecting a plurality of seedlings in the pick-up area using a camera vision system, identifying at least one of the plurality of seedlings that satisfies a pre-determined seedling selection criteria using a controller, and designating at least one seedling as the target seedling to be picked-up, optionally wherein the pick-up area comprises a pick-up table for holding a plurality of seedlings and the target seedling is picked-up from amongst the plurality of seedlings, preferably wherein the pre-determined seedling selection criteria comprises at least one of seedling area, elongation and spread, more preferably at least elongation, and even more preferably elongation and area.

14. The method of claim 13, wherein the pick-up table rotates about a table rotation axis, and wherein the target seedling is picked-up while the pick-up table is rotating, optionally wherein the pick-up table rotates to transport the plurality of seedlings from a deposit region where the plurality of seedlings are deposited on the pick-up table to an ejection region and further comprising ejecting unselected seedlings from the pick-up area when they enter the ejection region, optionally wherein the unselected seedlings are ejected from the pick-up table via a stream of air.

15. The method of any one of claims 7 to 14, further comprising a) receiving a plurality of seedlings from a growing station and washing the plurality of seedlings to remove excess growing material at a washing station before the plurality of seedlings are positioned in the pick-up area; and/or b) transferring the first soil plug containing the first seedling to a packing station and automatically packing the first soil plug containing the first seedling into a holding tray using an automated packing apparatus.

16. An apparatus for handling seedlings, the apparatus comprising:
a) a body having an attachment portion that is connectable to a driving member;
b) a vacuum channel comprising a first end fluidly connectable to a vacuum generator, an open tip spaced apart from the first end and a hollow channel interior extending therebetween, the tip terminating in a rim that is sized to slidingly receive a root portion of a seedling and engage a stem portion of the seedling, whereby when a vacuum is applied to the vacuum channel the root portion of the seedling is sucked into the channel interior and the stem portion of the seedling remains outside the vacuum channel, optionally wherein the body and vacuum channel are of integral, one-piece construction.

17. The apparatus of claim 16, wherein the vacuum channel further comprises a throat portion disposed between the first end and the tip, and wherein the throat portion has a smaller area than the tip and the vacuum channel generally narrows from the tip to the throat portion and/or wherein the body has a base surface that is substantially downward facing when the apparatus is in use, and wherein the tip extends beyond the base surface, optionally wherein the base surface has a base width in a lateral direction and the tip has a tip width in the lateral direction that is less than 25% of the base width.

18. The apparatus of any one of claims 16 or 17, wherein the rim has a first portion lying in a first plane, and a second portion lying in a second plane that intersects the first plane at an oblique angle, optionally wherein, the second plane is substantially parallel to the base surface.

19. The apparatus of claim 18, wherein the vacuum channel extends along a channel axis and wherein the first plane is orthogonal to the channel axis, preferably wherein a line of intersection between the first plane and the second plane is spaced apart from the channel axis, optionally wherein the channel axis is inclined at an oblique angle relative to a plane containing the base surface.

20. The apparatus of claim 19, wherein the body is rotatably connected to the driving member and can rotate about a rotation axis.

21. The apparatus of any one of claims 16 to 20, wherein the tip is configured to be inserted into a soil plug to deposit the root portion of the seedling within the soil plug, preferably wherein the tip is positioned such that when the tip is inserted into the soil plug the base surface bears against an upward facing side surface of the soil plug, preferably wherein the soil plug is a stabilized soil plug comprising a stabilization compound and/or a polymeric compound.

22. The apparatus of any one of claims 17 to 21, further comprising a ploughshare portion positioned below the base surface and aligned with the tip, optionally wherein the ploughshare portion extends between the base surface and an outer surface of the tip, the ploughshare portion configured to be inserted into the soil plug and form an opening/slit in the soil plug into which the root portion of the seedling is deposited, preferably wherein the apparatus is translatable relative to the soil plug in an insertion direction to translate the ploughshare and tip through an interior of the soil plug, whereby the tip trails the ploughshare portion through the interior of the soil plug.

23. The apparatus of claim 22 wherein the ploughshare has a base adjacent the tip of the vacuum channel and a leading edge spaced from the base in insertion direction, and wherein the leading edge is narrower than the base, preferably wherein the ploughshare tapers from the base to the leading edge.

24. The apparatus of any one of claims 18 to 23, wherein the vacuum channel extends along a channel axis and when the vacuum apparatus is in use the channel axis is inclined at an oblique channel angle relative to a vertical axis, preferably wherein the channel angle is between about 15 degrees and about 60 degrees, and preferably is about 45 degrees.

25. The system or method of any one of claims 1 to 15, wherein the seedling handling apparatus comprises the apparatus of any one of claims 16 to 24.
